(19) Europäisches Patentamt
European Patent Office
Office européen des brevets

(11) EP 4 467 602 A1

(12) **EUROPEAN PATENT APPLICATION**
published in accordance with Art. 153(4) EPC

(43) Date of publication:
**27.11.2024 Bulletin 2024/48**

(21) Application number: **22920646.1**

(22) Date of filing: **27.12.2022**

(51) International Patent Classification (IPC):
***C08L 21/00*** *(2006.01)* ***C08K 5/17*** *(2006.01)*
***C08K 5/41*** *(2006.01)* ***C08L 1/00*** *(2006.01)*

(52) Cooperative Patent Classification (CPC):
**C08K 5/17; C08K 5/41; C08L 1/00; C08L 21/00**

(86) International application number:
**PCT/JP2022/048102**

(87) International publication number:
**WO 2023/136130 (20.07.2023 Gazette 2023/29)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.01.2022 JP 2022005303**

(71) Applicant: **Nippon Paper Industries Co., Ltd.**
**Tokyo 114-0002 (JP)**

(72) Inventor: **KATO, Hayato**
**Tokyo 114-0002 (JP)**

(74) Representative: **Müller-Boré & Partner Patentanwälte PartG mbB**
**Friedenheimer Brücke 21**
**80639 München (DE)**

# (54) RUBBER COMPOSITION AND METHOD FOR PRODUCING SAME

(57) The present invention has its object of providing a rubber composition containing a rubber component and cellulose fibers and exhibiting favorable strength, and a production method of the same. That is, the present invention provides a rubber composition including a component A: a rubber component, a component B: a cellulose-based filler, and a component C: a cross-linkable compound that has a thiosulfuric acid group or an $\alpha,\beta$-unsaturated carbonyl group, and an amino group. The present invention also provides a production method of the rubber composition including a step of mixing and kneading the components A to C. It is preferable that the component B includes at least one selected from the group consisting of pulp fibers, a powdered cellulose, and fine cellulose fibers. The component C is preferably S-(3-aminopropyl)thiosulfuric acid.

## Description

### Technical Field

The present invention relates to a rubber composition and a production method of the same.

### Background Art

Rubber compositions containing a rubber component and cellulose-based fibers have been known to have excellent mechanical strength. For example, Patent Literature 1 describes that a rubber composition containing a rubber component, an inorganic filler, a plasticizer, and a powdered cellulose having predetermined physical properties at a certain blending ratio is excellent in moldability, mechanical properties, and the like.

### Citation List

#### Patent Literature

Patent Literature 1: Japanese Patent No. 6878787

### Summary of the Invention

#### Technical Problem

The utilization of a rubber composition containing a rubber component and cellulose-based fibers is desired in various fields, and there is a need for further strength improvement in such a rubber composition.
Thus, an object of the present invention is to provide a rubber composition containing a rubber component and cellulose fibers and exhibiting favorable strength and to provide a production method of the same.
The present invention provides the following <1> to <8>.

<1> A rubber composition comprising:

a component A: a rubber component;
a component B: a cellulose-based filler; and
a component C: a cross-linkable compound that has a thiosulfuric acid group or an α,β-unsaturated carbonyl group, and an amino group.

<2> The rubber composition according to <1>, wherein the component B includes at least one selected from the group consisting of pulp fibers, a powdered cellulose, and fine cellulose fibers.
<3> The rubber composition according to <1> or <2>, wherein the amino group is an $-NH_2$ group.
<4> The rubber composition according to any one of <1> to <3>, wherein
the component C includes at least

a compound in which the thiosulfuric acid group and the amino group are linked by an alkyl group, or
a compound in which the α,β-unsaturated carbonyl group and the amino group are linked by a divalent group including an aromatic ring and an amide bond.

<5> The rubber composition according to <4>, wherein the alkyl group is an alkyl group of 1 to 6 carbon atoms.
<6> The rubber composition according to any one of <1> to <5>, wherein the component C includes at least S-(3-aminopropyl)thiosulfuric acid.
<7> A production method of the rubber composition according to any one of <1> to <6>, comprising a step of kneading the component A: the rubber component, the component B: the cellulose-based filler, and the component C: the cross-linkable compound that has the thiosulfuric acid group or the α,β-unsaturated carbonyl group, and the amino group.
<8> The production method according to <7>, further comprising a step of vulcanizing a mixture after kneaded

#### Advantageous Effects of Invention

According to the present invention, there is provided a rubber composition containing a rubber component and cellulose fibers and exhibiting favorable strength, and there is also provided an efficient production method of the same.

Description of Embodiments

<1. Rubber composition>

The rubber composition contains the following components A to C.

<1.1 Component A: Rubber component>

The component A is a rubber component. Examples of the rubber component may include, but are not limited to, a natural rubber (NR), a synthetic rubber such as an isoprene rubber (IR), a butadiene rubber (BR), a styrene-butadiene rubber (SBR), a chloroprene rubber (CR), an acrylonitrile butadiene rubber (NBR), a butyl rubber (IIR), an ethylene propylene rubber (EPM), an ethylene propylene diene rubber (EPDM), a chlorosulfonated polyethylene (CSM), an acrylic rubber (ACM), a fluororubber (FKM), an epichlorohydrin rubber (CO, ECO), a urethane rubber (U), a silicone rubber (Q), a halogenated butyl rubber, and a polysulfide rubber. Furthermore, a thermoplastic elastomer such as a polystyrene-based thermoplastic elastomer, a polypropylene-based thermoplastic elastomer, a polydiene-based thermoplastic elastomer, a chlorine-based thermoplastic elastomer, and an engineering plastic-based elastomer may also be used.

The component A is preferably a natural rubber (NR) or an ethylene propylene diene rubber (EPDM), and more preferably an ethylene propylene diene rubber (EPDM).

Vulcanization of the rubber component is generally performed by a vulcanization system using a combination of sulfur or a sulfur donating compound and various general-purpose vulcanization accelerators such as a sulfenamide-based compound or a thiuram-based compound. Crosslinking with an organic peroxide is also possible. Examples of the organic peroxide may include commonly used compounds such as tert-butylperoxide, dicumylperoxide, tert-butylcumylperoxide, 1,1-di(tert-butylperoxy)-3,3,5-trimethylcyclohexane, 2,5-dimethyl-2,5-di(tert-butylperoxy) hexane, 2,5-dimethyl-2,5-di(tert-butylperoxy)hexyne-3 ,1,3-di(tert-butylperoxyisopropyl)benzene, 2,5-dimethyl-2,5-di(benzoylperoxy) hexane, tert-butylperoxy benzoate, tert-butylperoxyisopropyl carbonate, and n-butyl-4,4-di(tert-butylperoxy)valerate. When performing crosslinking with an organic peroxide, a polyfunctional unsaturated compound such as triallyl isocyanurate, triallyl cyanurate, triallyl trimellitate, trimethylolpropane trimethacrylate, or N,N'-m-phenylene bismaleimide is preferably used in combination.

<1.2 Component B: Cellulose-based filler>

The component B is a cellulose-based filler. The cellulose-based filler may be a filler derived from a cellulose raw material. Examples thereof may include pulp fibers, a powdered cellulose, and fine cellulose fibers.

<Cellulose raw material>

The cellulose raw material is generally wood, and may be any of hardwood, softwood, and a combination of two or more types of them. Examples of hardwood may include Fagus (for example, Fagus crenata), linden (for example, linden), Betula (for example, Betula platyphylla, and Betula grossa), Populus (for example, poplar), Eucalyptus (for example, eucalyptus), Acacia (for example, acacia), Quercus (for example, oak, Quercus phillyraeoides, Quercus serrata, and Quercus acutissima), Acer (for example, Acer pictum), Kalopanax (for example, Kalopanax septemlobus), Ulmus (for example, elm), Paulownia (for example, Paulownia tomentosa), Magnolia (for example, Magnolia hypoleuca), Salix (for example, willow), Aesculus (for example, Aesculus turbinata), Zelkova (for example, Zelkova serrata), Cornus (for example, Cornus controversa), and Fraxinus (for example, Fraxinus lanuginosa) plants. Eucalyptus plant is preferable. Examples of softwood include Cryptomeria (for example, Japanese cedar), Picea (for example, Picea jezoensis), Larix (for example, Larix kaempferi, western larch, and tamarack), Pinus (for example, Pinus thunbergii, Pinus parviflora, Pinus radiata, and eastern white pine), Abies (for example, Abies sachalinensis, Abies firma, and western fir), Taxus (for example, Taxus cuspidata), Thuja (for example, Thuja standishii, and yellow cedar (Alaska cedar)), Picea (for example, Picea polita, Picea bicolor, Picea jezoensis, Sitka spruce (Picea sitchensis), and eastern spruce), Podocarpus (for example, Podocarpus macrophyllus), Chamaecyparis (for example, Chamaecyparis pisifera, Chamaecyparis obtusa, and Chamaecyparis lawsoniana (Port Orford cedar)), Pseudotsuga (for example, Pseudotsuga japonica, Douglas fir (Pseudotsuga menziesii), and western hemlock), Thujopsis (e.g, Thujopsis dolabrata and Thujopsis dolabrata), Tsuga (for example, Tsuga sieboldii, and Tsuga diversifolia), and Cephalotaxus (for example, Cephalotaxus harringtonia) plants. Cryptomeria plant and Pinus plant are preferable. In addition, the material may be nonwood. Examples of nonwood may include bamboo, hemp, jute, kenaf, and agricultural waste.

<Example (1) of component B: Pulp fibers>

Examples of pulp fibers may include, but not particularly limited to, softwood unbleached kraft pulp (NUKP), softwood bleached kraft pulp (NBKP), hardwood unbleached kraft pulp (LUKP), hardwood bleached kraft pulp (LBKP), softwood unbleached sulfite pulp (NUSP), softwood bleached sulfite pulp (NBSP), thermomechanical pulp (TMP), linter pulp, recycled pulp, waste paper), nonwood pulp, and combinations of two or more selected from these.

The average fiber diameter of the pulp fibers is not particularly limited, and is generally 60 μm or less, preferably 50 μm or less, more preferably 30 μm or less or 20 μm or less, further preferably 10 μm or less. The average fiber diameter of the softwood kraft pulp is about 30 to 60 μm, the average fiber diameter of the hardwood kraft pulp is about 10 to 30 μm, and the average fiber diameter of other pulps (obtained after general purification) is about 50 μm (for example, 40 to 60 μm). For example, when a purified material having a size of several centimeters, such as chips, is used as a raw material, the material may be subjected to a treatment for adjusting the average fiber diameter (for example, to 50 μm or less), such as a mechanical treatment with a disintegrator such as a refiner or a beater.

<Example (2) of component B: Powdered cellulose>

A powdered cellulose is a cellulose in a powder form derived from the cellulose raw material. Examples of a method for producing the powdered cellulose may include Method 1: a method in which pulp is subjected to an acid hydrolysis treatment with an acid (for example, an inorganic acid (specifically, mineral acid such as hydrochloric acid, sulfuric acid, or nitric acid), and then subjected to a treatment such as a grinding treatment; and Method 2: a method in which pulp is subjected to a treatment such as machine grinding without an acid hydrolysis treatment. The method 1 is preferable. By Method 1, a powdered cellulose with low impurity content can be obtained.

The average particle diameter of the powdered cellulose is preferably 1 μm or more, more preferably 3 μm or more. The average particle diameter is preferably 70 μm or less, more preferably 50 μm or less, still more preferably 25 μm or less or less than 15 μm, even more preferably 11 μm or less. Therefore, the average particle diameter of the powdered cellulose is preferably 1 to 70 μm, more preferably 1 to 50 μm, 1 to 25 μm or 1 to 15 μm, and still more preferably 1 to 11 μm. In the present description, the average particle diameter is defined as a value obtained when the volume accumulation distribution becomes 50% when using a laser scattering method as the measurement principle and expressing the particle size distribution as an accumulation distribution.

The degree of polymerization (average degree of polymerization) of the powdered cellulose is preferably 100 or more, more preferably 200 or more. The upper limit is preferably 1400 or less, more preferably 1000 or less, still more preferably 500 or less, even more preferably 400 or less. Thus, the degree of polymerization of the powdered cellulose is preferably 100 to 1400, more preferably 100 to 1000 or 100 to 500, still more preferably 100 to 500, 100 to 400 or 200 to 500, even more preferably 100 to 400 or 200 to 400. The degree of polymerization may be determined by the viscosity measurement method using copper ethylenediamine described in the 16th revised Japanese Pharmacopoeia Commentary, Crystalline Cellulose Identification Test (2). As for the extent to which the measurement cannot be achieved by the method described in the crystalline cellulose identification test (2), an intrinsic viscosity may be measured using, for example, a fully automated viscosity measuring system RPV-1 (manufactured by RHEOTEK) for pulp/polymer, and the extent may be obtained from the equation of $[\eta] = 0.909 \times DP\ 0.85$ (Equation (2) in the literature) described in "VISCOSITY MEASUREMENTS OF CELLULOSE / $SO_2$-AMINE DIMETHYLSULFOXIDE SOLUTION" (Isogai et al., 1998).

The apparent specific gravity of the powdered cellulose is preferably 0.1 to 0.6 g/ml, more preferably 0.1 to 0.45 g/ml, still more preferably 0.15 to 0.45 g/ml, and particularly preferably 0.2 to 0.4 g/ml. Apparent specific gravity may be calculated by placing 10 g of a sample into a 100-ml measuring cylinder, continuously hitting the bottom of the measuring cylinder until the height of the sample is no longer lowered (by hand operation for approximately 10 minutes), reading the scale marking at the flat surface, and dividing the read value by the weight of the sample.

The crystallization degree of type I cellulose of the powdered cellulose is preferably 70 to 90%, more preferably 80 to 90%. The crystallization degree of type I cellulose may be calculated by performing X-ray diffraction measurement of a sample, and measuring and comparing the intensity at the (200) peak around 22.6° and that at the valley between (200) and (110) (around 18.5°). The crystallization degree can be adjusted according to the type of cellulose raw material and the production method. A powdered cellulose produced through an acid hydrolysis treatment (for example, by the method of (1)) tends to have a high crystallization degree, and a powdered cellulose produced without the treatment (for example, by the method of (2)) tends to have a low crystallization degree.

<Example (3) of component B: Fine cellulose fibers>

Fine cellulose fibers are fine fibrous celluloses derived from the cellulose raw material. The fine fibrous cellulose is, for example, one in which the light transmittance determined at a light path length of 1 cm/660 nm with a visible spectrometer (UV-1800 manufactured by Shimadzu Corporation) using a dispersion liquid (1wt%) of the fine cellulose

fibers is in the range of 1 to 99%. Examples of a method for producing fine cellulose fibers may include a method in which a defibration of pulp is performed and a method in which a chemical modification treatment is performed before and after defibration, as necessary (usually before defibration). Fine cellulose fibers having a nano-scale fiber diameter are called cellulose nanofibers, and fine cellulose fibers having a micron-scale fiber diameter are called cellulose microfibrils. The size of the fine cellulose fibers can be adjusted by adjusting the conditions and other factors in a micronization treatment or a chemical modification treatment.

The aforementioned powdered cellulose is not dispersed after being stirred in a solvent such as water, resulting in sedimentation, and therefore the light transmittance of the dispersion liquid cannot be measured. Thus, the powdered cellulose can thus be clearly distinguished from the fine cellulose fibers.

<Example (3-1) of component B: Cellulose nanofibers>

In the present description, cellulose nanofibers (CNF) mean cellulose fibers that are prepared through a micronization treatment and that have a nano-scale fiber diameter.

The average fiber diameter (length-weighted average fiber diameter) of CNF is 500 nm or less, preferably 300 nm or less, more preferably 100 nm or less, still more preferably 50 nm or less. The lower limit is not particularly limited, and is usually 1 nm or more, preferably 2 nm or more. Thus, the average fiber diameter (length-weighted average fiber diameter) of CNF is usually 1 to 500 nm or 2 to 500 nm, preferably 2 to 300 nm or 2 to 100 nm, more preferably 2 to 50 nm or 3 to 30 nm. The average fiber length (length-weighted average fiber length) is usually 50 to 2000 nm, preferably 100 to 1000 nm. The aspect ratio of CNF is usually 10 or more, preferably 50 or more. The upper limit thereof is not particularly limited, and is usually 1000 or less.

The average fiber diameter and the average fiber length of the fine cellulose fibers may be obtained by a fractionator manufactured by Valmet K.K. When a fractionator is used, they can be determined as a length-weighted fiber width and a length-weighted average fiber length, respectively. The average aspect ratio of the fine cellulose fibers may be calculated by the formula: average aspect ratio = average fiber length / average fiber diameter.

<Example (3-2) of component B: Cellulose microfibrils>

In the present description, cellulose microfibrils (microfibrillated cellulose, MFC) mean cellulose fibers that are prepared through a micronization treatment and that have a micro-scale fiber diameter.

The average fiber diameter (average fiber width) of MFC is usually 500 nm or more, preferably 1 μm or more, more preferably 3 μm or more. The MFC with such an average fiber diameter can exhibit a higher water retention than that of unfibrillated cellulose fibers, and can obtain a higher strength-imparting effect even at a small amount and a higher yield-improving effect as compared with finely defibratd CNF. The upper limit of the average fiber diameter is not particularly limited, and is preferably 60 μm or less, more preferably 40 μm or less, still more preferably 30 μm or less, even more preferably 20 μm or less. The average fiber length is usually 10 μm or more, 20 μm or more, or 40 μm or more, preferably 200 μm or more, 300 μm or more or 400 μm or more. The average fiber length is more preferably 500 μm or more or 550 μm or more, even more preferably 600 μm or more, 700 μm or more, 800 μm or more. The upper limit is not particularly limited, and is usually 3,000 μm or less, preferably 2,500 μm or less, more preferably 2,000 μm or less, still more preferably 1,500 μm or less, 1,400 μm or less, or 1,300 μm or less. The aspect ratio of MFC is preferably 3 or more, more preferably 5 or more, still more preferably 7 or more, and may be 10 or more, 20 or more or 30 or more. The upper limit of the aspect ratio is not particularly limited, and is preferably 1000 or less, more preferably 100 or less, even more preferably 80 or less.

<Modification>

The fine cellulose fibers may be modified fine cellulose fibers or unmodified fine cellulose fibers. The modified fine cellulose fibers mean fine cellulose fibers (for example, cellulose nanofibers or cellulose microfibrils) in which at least any of three hydroxyl groups contained in a glucose unit is chemically modified (hereinafter simply referred to as "modification/modified"). By a chemical modification treatment, the micronization of the cellulose fibers is sufficiently advanced, and by defibration, cellulose nanofibers having uniform average fiber length and average fiber diameter are obtained. Therefore, when the cellulose nanofibers are composed with the rubber component, a sufficient reinforcement effect can be exerted. From this viewpoint, the modified cellulose fibers are preferable.

Examples of the modification may include oxidation, etherification, esterification such as phosphoric acid-esterification, silane coupling, fluorination, and cationization. Among these, oxidation (carboxylation), etherification, cationization, and esterification are preferable, and oxidation (carboxylation) is more preferable.

- Oxidation (carboxylation) -

Oxidized fine cellulose fibers usually have a structure in which at least one carbon atom having a primary hydroxyl group (for example, a carbon atom having a primary hydroxyl group at a C6 position) contained in a glucopyranose unit constituting the cellulose molecular chain is oxidized. The amount of the carboxy group in the oxidized cellulose fibers and the oxidized cellulose nanofibers is preferably 0.5 mmol/g or more, more preferably 0.8 mmol/g or more, still more preferably 1.0 mmol/g or more, relative to the absolute dry mass. The upper limit of the amount is preferably 3.0 mmol/g or less, more preferably 2.5 mmol/g or less, still more preferably 2.0 mmol/g or less. The amount of the carboxy group is preferably 0.5 to 3.0 mmol/g, more preferably 0.8 to 2.5 mmol/g, still more preferably 1.0 to 2.0 mmol/g. The amount of the carboxy group may be adjusted by controlling the conditions (for example, the amount of the oxidizing agent added and the reaction time) during oxidation of the cellulose fibers. The amounts of the carboxylate group and the aldehyde group may also be adjusted by controlling these conditions.

The amount of the carboxy group may be calculated by the following procedure. A 0.5mass% slurry (aqueous dispersion) of an oxidized cellulose is prepared in an amount of 60 ml. To the prepared slurry, a 0.1M aqueous hydrochloric acid solution is added to adjust the pH to 2.5. A 0.05N aqueous sodium hydroxide solution is then added dropwise and the electrical conductivity is measured until the pH becomes 11. From the amount of sodium hydroxide (a) consumed in the neutralization stage of a weak acid, during which the change in electrical conductivity is moderate, the amount of the carboxy group is calculated using the following formula:

Amount of carboxy group [mmol/g oxidized cellulose] = a [ml] $\times$ 0.05/mass of oxidized cellulose [g]

The oxidation method is not particularly limited, and examples thereof may include a method of oxidizing a cellulose raw material in water using an oxidizing agent in the presence of an N-oxyl compound and a bromide, an iodide, or mixtures thereof. According to this method, the primary hydroxyl group at the C6 position of the glucopyranose ring on the cellulose surface is selectively oxidized to yield at least one group selected from the group consisting of an aldehyde group, a carboxy group (-COOH), and a carboxylate group ($-COO^-$). The concentration of the cellulose raw material during the reaction is not particularly limited, and is preferably 5% by mass or less.

An N-oxyl compound refers to a compound capable of generating a nitroxy radical. Examples of the nitroxyl radicals may include 2,2,6,6-tetramethylpiperidine 1-oxyl (TEMPO) and derivatives thereof (for example, 4-hydroxy TEMPO). As the N-oxyl compound, any compound can be used as long as it is a compound that promotes the desired oxidation reaction. The amount of the N-oxyl compound to be used is not particularly limited as long as it is a catalytic amount capable of oxidizing a cellulose that serves as a raw material. For example, the amount of the N-oxyl compound is preferably 0.01 mmol or more, more preferably 0.02 mmol or more, relative to 1 g of the absolute dry mass of the cellulose raw material. The upper limit thereof is preferably 10 mmol or less, more preferably 1 mmol or less, even more preferably 0.5 mmol or less. The amount of the N-oxyl compound to be used is preferably 0.01 to 10 mmol, more preferably 0.01 to 1 mmol, still more preferably 0.02 to 0.5 mmol, relative to 1 g of the absolute dry mass of the cellulose raw material. The amount of N-oxyl compound to be used for the reaction system is usually 0.1 to 4 mmol/L.

A bromide is a compound containing bromine and examples thereof may include a bromide of an alkali metal which is dissociable and ionizable in water. An iodide is a compound containing iodine, and examples thereof may include an iodide of an alkali metal. The amount of the bromide or iodide to be used may be selected within a range that can accelerate the oxidation reaction. The total amount of the bromide and iodide is preferably 0.1 to 100 mmol, more preferably 0.1 to 10 mmol, even more preferably 0.5 to 5 mmol, relative to 1 g of the absolute dry mass of the cellulose raw material.

As the oxidizing agent, known ones can be used, and examples of oxidizing agents that can be used may include halogen, hypohalous acid, halous acid, perhalogen acid or a salt thereof, halogen oxide, and peroxide. Among these, hypohalous acid or a salt thereof is preferable because it is inexpensive and the environmental impact is small. Hypochlorite or a salt thereof is more preferable, and sodium hypochlorite is preferable. The appropriate amount of the oxidizing agent to be used is, for example, preferably 0.5 to 500 mmol, more preferably 0.5 to 50 mmol, still more preferably 1 to 25 mmol, still further preferably 3 to 10 mmol, relative to 1 g of the absolute dry mass of the cellulose raw material. In addition, for example, the amount thereof is preferably 1 to 40 mol relative to 1 mol of the N-oxyl compound.

In the step of oxidizing the cellulose raw material, the reaction proceeds efficiently even under relatively mild conditions. Therefore, the reaction temperature is preferably 4 to 40°C, and may be about 15 to 30°C, that is, at room temperature. As the reaction proceeds, carboxy groups are formed in the cellulose, and thus, it is confirmed that the pH of the reaction solution is reduced. It is preferable to add an alkaline solution such as an aqueous sodium hydroxide solution to maintain the pH of the reaction solution at about 8 to 12, or 10 to 11, in order to make the oxidation reaction progress efficiently. The reaction medium is preferably water because it is easy to handle and side reactions are unlikely to occur.

The reaction time of the oxidation reaction can be appropriately set according to the degree of progress of

oxidation and is usually 0.5 to 6 hours, for example, about 0.5 to 4 hours.

The oxidation reaction may be performed in two stages. For example, the oxidized cellulose obtained by filtering the product after the completion of the first stage reaction is oxidized again under the same or different reaction conditions, so that the oxidized cellulose can be efficiently oxidized without being inhibited by the salt that is secondarily produced in the first stage reaction.

Another example of the carboxylation (oxidation) method may include a method of oxidizing by bringing a gas containing ozone into contact with a cellulose raw material (ozone oxidation). This oxidation reaction oxidizes at least the hydroxyl groups at the 2- and 6-positions of the glucopyranose ring and causes degradation of the cellulose chain. The ozone concentration in the gas containing ozone is preferably 50 to 250 g/m3, more preferably 50 to 220 g/$m^3$. The amount of ozone to be added is preferably 0.1 to 30 parts by mass, more preferably 5 to 30 parts by mass, relative to 100 parts by mass of the solid content of the cellulose raw material. The ozone treatment temperature is preferably 0 to 50°C, more preferably 20 to 50°C. The ozone treatment time is not particularly limited, and is about 1 to 360 minutes, preferably about 30 to 360 minutes. When the conditions of the ozone treatment are within these ranges, the cellulose raw material can be prevented from being excessively oxidized and decomposed, and the yield of the oxidized cellulose is improved.

After the ozone treatment, an additional oxidation treatment may be performed using an oxidizing agent. The oxidizing agent used in the additional oxidation treatment is not particularly limited, and examples thereof may include a chlorine-based compound such as chlorine dioxide and sodium chlorite, oxygen, hydrogen peroxide, persulfate, and peracetic acid. As a procedure of the additional oxidation treatment, for example, an oxidizing agent solution is prepared by dissolving these oxidizing agents in water or a polar organic solvent such as alcohol, and the oxidized cellulose is immersed in the solution.

An example of a method for measuring the amount of the carboxy group will be described below. A 0.5mass% oxidized cellulose slurry (aqueous dispersion) in an amount of 60 mL is prepared, and a 0.1M aqueous hydrochloric acid solution is added thereto to adjust the pH to 2.5. After that, a 0.05N aqueous sodium hydroxide solution is added dropwise thereto, and the electrical conductivity is measured until the pH becomes 11. From the amount of sodium hydroxide (a) consumed in the neutralization stage of the weak acid, during which the change in electrical conductivity is moderate, the amount of the carboxy group can be calculated using the following (formula 2).

Amount of carboxy group [mmol/g (oxidized cellulose or oxidized cellulose nanofibers)] = a [mL] $\times$ 0.05 / mass of oxidized cellulose or mass of oxidized cellulose nanofibers [g]

- Acid-oxidized cellulose and desalting -

The oxidized cellulose contains a carboxy group after being oxidized, and may contain more acid type carboxy groups (-COOH) than salt type carboxy groups (for example, -COO-, -COONa), or may contain more salt type carboxy groups than acid type carboxy groups. The amount of the salt-type carboxy group and the acid-type carboxy group may be adjusted by desalting. By the desalting treatment, the salt-type carboxy group can be converted into an acid-type carboxy group. In the present description, the oxidized cellulose (one having been desalted) is referred to as an acid-type oxidized cellulose, and the oxidized cellulose (not subjected to a desalting treatment, which will be described later) is referred to as a salt-type oxidized cellulose. Usually, the salt-type oxidized cellulose mainly has a salt-type carboxy group. On the other hand, the acid-type oxidized cellulose has a large number of acid-type carboxy groups, and the proportion of the acid-type carboxy groups in the carboxy groups is preferably 40% or more, more preferably 60% or more, still more preferably 85% or more. The acid-type oxidized cellulose may exhibit a better reinforcing effect together with the component C. The proportion of the acid-type carboxyl groups may be calculated by the following procedure.

1) Initially, 250 mL of an aqueous dispersion with a solid concentration of 0.1% by mass of the acid-type oxidized celluloses that have not been desalted yet is prepared. To the prepared aqueous dispersion, a 0.1M aqueous hydrochloric acid solution is added to adjust the pH to 2.5, and then a 0.1N aqueous sodium hydroxide solution is added thereto. The electrical conductivity is measured until the pH becomes 11. From the amount of sodium hydroxide (a) consumed in the neutralization stage of a weak acid, during which the change in electrical conductivity is moderate, the amount of the acid-type carboxy groups and the amount of the salt-type carboxy groups, that is, the total amount of the carboxy groups is calculated using the following formula:

Total amount of carboxy groups (mmol/g oxidized cellulose (salt type)) = a (ml) $\times$ 0.1 / mass of oxidized cellulose (salt type) (g)

2) 250 mL of an aqueous dispersion of the desalted acid-type oxidized cellulose with 0.1% by mass of solid concentration is prepared. To the prepared aqueous dispersion, a 0.1N aqueous sodium hydroxide solution is

added, and the electrical conductivity is measured until the pH becomes 11. From the amount of sodium hydroxide (b) consumed in the neutralization stage of a weak acid, during which the change in electrical conductivity is moderate, the amount of the acid-type carboxy groups is calculated using the following formula:

Amount of acid-type carboxy groups (mmol/g acid-type oxidized cellulose) = b (ml) × 0.1 / mass of acid-type oxidized cellulose (g)

3) The proportion of the acid-type carboxyl groups is calculated from the calculated total amount of the carboxyl groups and the calculated amount of the acid-type carboxyl groups by using the following formula.

Proportion (%) of acid type carboxy groups = (amount of acid type carboxy groups / total amount of carboxy groups) × 100.

The desalting may be performed after oxidation, may be performed before and after defibration (before and after the step (2)), is usually performed after oxidation, and is preferably performed before the step (2). Desalting is usually performed by replacing the salt (for example, sodium salt) contained in the salt-type oxidized cellulose with a proton. Examples of the desalting method may include a method of adjusting the system to be acidic and a method of bringing the oxidized cellulose into contact with a cation-exchange resin. In the method of adjusting the system to be acidic, the pH in the system is preferably adjusted to 2 to 6, more preferably 2 to 5, still more preferably 2.3 to 5. To adjust the system to be acidic, an acid (for example, an inorganic acid such as sulfuric acid, hydrochloric acid, nitric acid, sulfurous acid, nitrous acid, phosphoric acid, or the like; and an organic acid such as acetic acid, lactic acid, oxalic acid, citric acid, formic acid, or the like) is usually used. After the addition of the acid, a washing treatment may be appropriately performed. As the cation-exchange resin, any of a strongly acidic ion exchange resin and a weakly acidic ion exchange resin can be used as long as the counter ion is $H^+$. When the oxidized cellulose is brought into contact with the cation-exchange resin, the ratio of the oxidized cellulose to the cation-exchange resin is not particularly limited, and a person skilled in the art can appropriately set the ratio from the viewpoint of efficiently performing proton substitution. Recovery of the cation-exchange resin after the contact may be performed by a conventional method such as suction filtration.

- Etherification -

Examples of etherification may include carboxyalkylation, methylation, ethylation, cyanoethylation, hydroxyethylation, hydroxypropylation, ethylhydroxyethylation, and hydroxypropylmethylation, with carboxyalkylation being preferable, and with carboxymethylation being more preferable.

Carboxyalkylated cellulose fibers usually have a structure in which at least one carbon atom constituting the cellulose molecular chain (for example, a carbon atom that has a primary hydroxyl group at a C6 position and that constitutes a glucopyranose unit) is carboxymethylated.

The degree of substitution with carboxyalkyl group (DS, preferably a degree of substitution with carboxymethyl group) of the carboxyalkylated cellulose per anhydroglucose unit is preferably 0.01 or more, 0.02 or more or 0.05 or more, more preferably 0.10 or more, still more preferably 0.15 or more, still more preferably 0.20 or more, particularly preferably 0.25 or more. With such values, a degree of substitution that obtains the advantageous effects of chemical modification can be ensured. The upper limit of the degree of substitution is preferably 0.50 or less, more preferably 0.45 or less, 0.40 or less or 0.35 or less. With such values, the cellulose fibers are less likely to be dissolved in water, and the fiber morphology can be maintained in water. Thus, the degree of substitution with carboxyalkyl group is preferably 0.01 to 0.50, more preferably 0.01 to 0.45, even more preferably 0.02 to 0.40, 0.10 to 0.35 or 0.20 to 0.30.

The degree of substitution, for example, the degree of substitution with carboxymethyl group, may be measured by the following method. Approximately 2.0 g of a carboxymethylated cellulose (absolute dry mass) is accurately weighed and placed in a 300mL Erlenmeyer flask with a stopper. To this, 100 mL of a liquid, which has been obtained by adding 100 mL of special-grade concentrated nitric acid to 1,000 mL of methanol, is added. The mixture is shaken for 3 hours to convert the salt-type carboxymethylated cellulose (hereinafter also referred to as "salt-type CM cellulose") into an acid-type carboxymethylated cellulose (hereinafter also referred to as "acid-type CM cellulose"). Then, 1.5 to 2.0 g of the acid-type CM cellulose (absolute dry mass) is accurately weighed and placed in a 300mL Erlenmeyer flask with a stopper. The acid-type CM cellulose is wetted with 15 mL of 80% methanol, and 100 mL of 0.1N NaOH is added thereto. The mixture is shaken at room temperature for 3 hours. As an indicator, using phenolphthalein excessive NaOH is back-titrated with 0.1N $H_2SO_4$. The degree of substitution (DS) with carboxymethyl group can be calculated by the following formula:

A = [(100 × F - (0.1N $H_2SO_4$ (mL)) × F') × 0.1] / (absolute dry mass of acid-type CM cellulose (g))

$$DS = 0.162 \times A / (1 - 0.058 \times A)$$

A: Amount of 1N NaOH (mL) required to neutralize 1 g of acid-type CM cellulose
F': Factor of 0.1N $H_2SO_4$
F: Factor of 0.1N NaOH

The degree of substitution with carboxyalkyl group can be adjusted by controlling the reaction conditions such as the added amount of the carboxyalkylating agent to be reacted, the amount of the mercerizing agent, the composition ratio of water and the organic solvent, and the like.
Examples of the method of carboxyalkylation may include a method in which a cellulose-based raw material as a starting material (starting raw material) is mercerized and then etherified. The method will be described below with reference to an example of the carboxymethylation.
The unmodified cellulose fibers (cellulose raw material: for example, pulp) are used as a starting material, and are subjected to a mercerization treatment, followed by performing an etherification reaction, whereby a carboxymethylated cellulose can be produced. The reaction is usually performed in the presence of a solvent. As the solvent, for example, water, a lower alcohol (for example, methanol, ethanol, n-propyl alcohol, isopropyl alcohol, n-butyl alcohol, isobutyl alcohol, or tertiary butanol) may be used alone, or a mixed solvent of two or more types thereof may be used. When a lower alcohol is mixed, the mixing proportion of the lower alcohol is preferably 60 to 95% by mass. The amount of the solvent is about three times the amount of the cellulose raw material in terms of mass. The upper limit of the amount is not particularly limited, and is 20 times or less. The amount of the solvent is preferably 3 to 20 times the amount of the cellulose raw material in terms of mass.
Examples of the mercerizing agent may include an alkali metal hydroxide such as sodium hydroxide and potassium hydroxide.
The amount of the mercerizing agent to be used is preferably 0.5 times or more, more preferably 1.0 times or more, even more preferably 1.5 times or more, per anhydroglucose residue of the starting material in terms of moles. The upper limit of the amount is usually 20 times or less, preferably 10 times or less, more preferably 5 times or less. The amount of the mercerizing agent to be used is preferably 0.5 to 20 times, more preferably 1.0 to 10 times, even more preferably 1.5 to 5 times in terms of moles.
The reaction temperature of the mercerization is usually 0°C or higher, preferably 10°C or higher. The upper limit is usually 70°C or lower, preferably 60°C or lower. The reaction temperature is usually 0 to 70°C, preferably 10 to 60°C.
The reaction time of the mercerization is usually 15 minutes or longer, preferably 30 minutes or longer. The upper limit is usually 8 hours or shorter, preferably 7 hours or shorter. The reaction time is usually 15 minutes to 8 hours, preferably 30 minutes to 7 hours.
The etherification reaction is usually performed by adding a carboxymethylating agent to the reaction system after the mercerization. Examples of the carboxymethylating agent may include sodium monochloroacetate.
The amount of the carboxymethylating agent added is preferably 0.05 times or more, more preferably 0.5 times or more, even more preferably 0.8 times or more, per glucose residue of the cellulose raw material in terms of moles. The upper limit of the amount is usually 10.0 times or less, preferably 5 times or less, more preferably 3 times or less. The amount of the carboxymethylating agent added is preferably 0.05 to 10.0 times, more preferably 0.5 to 5 times, still more preferably 0.8 to 3 times in terms of moles.
The reaction temperature is usually 30°C or higher, preferably 40°C or higher. The upper limit is usually 90°C or lower, preferably 80°C or lower. The reaction temperature is usually 30 to 90°C, preferably 40 to 80°C. The reaction time is usually 30 minutes or longer, preferably 1 hour or longer. The upper limit is usually 10 hours or shorter, preferably 4 hours or shorter. The reaction time is usually 30 minutes to 10 hours, preferably 1 hour to 4 hours.
In the carboxymethylation reaction, the reaction solution may be stirred as necessary.

- Difference from carboxymethylcellulose -

Preferably, the carboxyalkylated cellulose fibers maintain at least a portion of the fibrous shape when dispersed in water. Carboxyalkylated cellulose fibers are distinguished from cellulose powders of carboxymethylcellulose or the like, which is a type of water-soluble polymer that dissolves in water to impart viscosity. When an aqueous dispersion of carboxyalkylated cellulose fibers is observed with an electron microscope, fibrous substances can be observed. On the other hand, when an aqueous dispersion of carboxymethyl cellulose, which is a type of water-soluble polymer, is observed, no fibrous substance is observed. In addition, when the anion-modified cellulose fibers are measured by X-ray diffraction, the peak of the type I cellulose crystal can be observed. When the carboxymethylcellulose powder, which is a water-soluble polymer, is measured in a similar manner, the type I cellulose crystal is usually not observed.

- Acid-type carboxyalkylated cellulose and desalting -

The carboxyalkylated cellulose may contain more acid-type carboxy groups than salt-type carboxy groups, or may contain more salt-type carboxy groups than acid-type carboxy groups. The amount of the salt-type carboxy groups and the acid-type carboxy groups can be adjusted by performing a desalting treatment. By the desalting treatment, the salt-type carboxy groups can be converted to acid-type carboxy groups. In the present description, the carboxyalkylated cellulose (desalted cellulose) is referred to as an acid-type carboxyalkylated cellulose, and the carboxyalkylated cellulose (not desalted cellulose, which will be described later) is referred to as a salt-type carboxyalkylated cellulose. Usually, the salt-type carboxyalkylated cellulose mainly has a salt-type carboxy group (-COO-). On the other hand, the acid-type carboxyalkylated cellulose has a larger number of acid-type carboxy groups, and the proportion of the amount of the acid-type carboxy groups to the amount of the carboxy groups possessed by the acid-type carboxyalkylated cellulose is preferably 40% or more, more preferably 60% or more, still more preferably 85% or more. It is presumed that the acid-type carboxyalkylated cellulose is superior in reinforcing effect with the component C. The method of calculating the proportion of the acid-type carboxyl groups is as described above.

The time for desalting is usually after carboxyalkylation, preferably after etherification and before fibrillation. Examples of the desalting method may include a method in which a carboxyalkylated cellulose is brought into contact with a cation-exchange resin. As the cation-exchange resin, any of a strongly acidic ion-exchange resin and a weakly acidic ion-exchange resin can be used as long as the counter ion is $H^+$. When the carboxyalkylated cellulose is brought into contact with the cation-exchange resin, the ratio of the carboxyalkylated cellulose to the cation-exchange resin is not particularly limited, and a person skilled in the art can appropriately set the ratio from the viewpoint of efficiently performing proton substitution. In one example, the ratio to the carboxyalkylated cellulose aqueous dispersion can be adjusted so that the pH of the aqueous dispersion after addition of the cation-exchange resin becomes preferably 2 to 6, more preferably 2 to 5. Recovery of the cation-exchange resin after the contact may be performed by a conventional method such as suction filtration.

- Esterification (phosphoric acid-esterification)-

A first example of esterified cellulose fibers may includes a phosphorylated cellulose. A phosphorylated cellulose usually has a structure in which at least one carbon atom constituting a cellulose molecular chain (for example, a carbon atom that has a primary hydroxyl group at a C6 position and that constitutes a glucopyranose unit) is phosphorylated.

The degree of substitution with phosphoric acid-based group per glucose unit in the phosphoric acid-esterified CNF (hereinafter simply referred to as "degree of substitution with phosphoric acid group") is preferably 0.001 or more and less than 0.40. The degree of substitution with phosphoric acid group may be obtained by measurement by the following method. A slurry of phosphoric acid-esterified CNF with a solid content of 0.2% by mass is prepared. A strongly acidic ion-exchange resin having a volume of 1/10 is added to the slurry, and shaken for 1 hour. After that, the mixture is poured onto a mesh having an opening degree of 90 μm to separate the resin and the slurry. In this manner, a hydrogen-type phosphoric acid-esterified CNF is obtained. Then, a 0.1N aqueous sodium hydroxide solution is added to the slurry, which has been subjected to the treatment with the ion-exchange resin, in 50μL portions once every 30 seconds, and the change in the value of the electrical conductivity of the slurry is measured. The amount of phosphoric acid group (mmol/g) per 1 g of hydrogen-type phosphoric acid-esterified CNF is calculated by dividing the amount of alkali (mmol) required in the region where the electrical conductivity rapidly decreases, among the measured results, by the solid content (g) in the slurry to be titrated. In addition, the degree of substitution (DS) with phosphoric acid group per glucose unit of the phosphoric acid-esterified CNF is calculated by the following formula:

$$DS = 0.162 \times A / (1 - 0.079 \times A)$$

A: Amount (mmol/g) of phosphoric acid group per 1 g of hydrogen-type phosphoric acid-esterified CNF.

The degree of substitution with phosphoric acid group can be adjusted by controlling the reaction conditions such as the added amount of the compound having a phosphoric acid group and the added amount of the basic compound to be used as necessary.

As a method of phosphorylation, for example, a method of reacting a compound having a phosphoric acid group with unmodified cellulose fibers (phosphoric acid-esterification) can be mentioned. Examples of the phosphoric acid-esterification method may include a method in which a powder or an aqueous solution of a compound having a phosphoric acid group is mixed with a cellulose-based raw material (for example, a suspension (solid concentration of about 0.1 to 10% by mass)), and a method in which an aqueous solution of a compound having a phosphoric acid group is added to an aqueous dispersion of a cellulose-based raw material, with the latter being preferable. As a result, the uniformity of the reaction can be increased, and the esterification efficiency can be increased. The pH of the aqueous solution of the compound having a phosphoric acid group is preferably 7 or lower from the viewpoint of enhancing the effectiveness of the

introduction of the phosphoric acid group, more preferably 3 to 7 from the viewpoint of suppressing hydrolysis.

Examples of the compound having a phosphoric acid group may include phosphoric acid, polyphosphoric acid, phosphorous acid, phosphonic acid, polyphosphonic acid, and esters and salts thereof. These compounds are inexpensive, easy to handle, and can improve defibration efficiency by introducing a phosphoric acid group into a cellulose. Specific examples of the compound having a phosphoric acid group may include phosphoric acid, sodium dihydrogen phosphate, disodium hydrogen phosphate, trisodium phosphate, sodium pyrophosphate, sodium metaphosphate, potassium dihydrogen phosphate, dipotassium hydrogen phosphate, tripotassium phosphate, potassium pyrophosphate, potassium metaphosphate, ammonium dihydrogen phosphate, diammonium hydrogen phosphate, triammonium phosphate, ammonium pyrophosphate, and ammonium metaphosphate. As the compound having a phosphoric acid group, one type thereof may be solely used, and two or more types thereof may also be used in combination. The amount of the compound having a phosphoric acid group added to the cellulose raw material is preferably 0.1 to 500 parts by mass, more preferably 1 to 400 parts by mass, still more preferably 2 to 200 parts by mass, in terms of phosphorus element, relative to 100 parts by mass of the solid content of the cellulose raw material. As a result, a yield corresponding to the amount of the compound having a phosphoric acid group used can be efficiently obtained. The reaction temperature is preferably 0 to 95°C, more preferably 30 to 90°C. The reaction time is not particularly limited, and is usually about 1 to 600 minutes, preferably 30 to 480 minutes. When the conditions of the esterification reaction fall within any of these ranges, the cellulose can be prevented from being excessively esterified and easily dissolved, and the yield of the phosphoric acid-esterified cellulose can be improved. When the compound having a phosphoric acid group is reacted, a basic compound (for example, a compound having an amino group exhibiting basicity such as urea, methylamine, ethylamine, trimethylamine, triethylamine, monoethanolamine, diethanolamine, triethanolamine, pyridine, ethylenediamine, and hexamethylenediamine) may further be added to the reaction system.

The suspension obtained after the esterification is preferably dehydrated, as necessary, and is preferably subjected to a heat treatment after the dehydration. Thus, hydrolysis of the cellulose raw material can be suppressed. The heating temperature is preferably 100 to 170°C, and it is more preferable to heat the suspension at 130°C or lower (preferably 110°C or lower) while water is contained during the heat treatment to remove water therefrom, and then heat the suspension at 100 to 170°C. After boiling, washing treatment such as washing with cold water is preferably performed. Thus, defibration can be performed efficiently. The washing may be performed by dehydration (for example, filtration) after the addition of water, and may be repeated two or more times. The washing is preferably performed until the electrical conductivity of the filtrate is reduced. For example, it can be performed until the electrical conductivity becomes preferably 200 or less, more preferably 150 or less, even more preferably 120 or less. After washing, a neutralization treatment may be performed as necessary. Neutralization can be achieved by addition of, for example, alkali (for example, sodium hydroxide). After neutralization, washing may be performed again.

- Esterification (phosphorous acid-esterification) -

A second example of the method for producing esterified cellulose fibers may include phosphorous acid-esterified cellulose fibers. Phosphitylated cellulose fibers usually have a structure in which at least one carbon atom constituting a cellulose molecular chain (for example, a carbon atom that has a primary hydroxyl group at a C6 position and that constitutes a glucopyranose unit) is phosphitylated.

The degree of substitution with phosphorous acid group per glucose unit in the phosphorous acid-esterified cellulose fibers (hereinafter simply referred to as "degree of substitution with phosphorous acid group")) is preferably 0.001 to 0.60. As a result, electrical repulsion between the cellulose is likely to occur, and nano-defibration is facilitated. The degree of substitution with phosphorous acid group may be measured by the same method as the method of measuring the degree of substitution with phosphoric acid group. The degree of substitution with phosphorous acid group can be adjusted by controlling the reaction conditions such as the added amount of phosphorous acid or a salt thereof, the added amount of an alkali metal ion-containing substance, urea or a derivative thereof to be used as necessary, and the like.

Examples of the method of phosphorous acid-esterification may include a method in which phosphorous acid or a metal salt thereof (preferably, sodium hydrogen phosphite) is reacted with unmodified cellulose fibers to introduce an ester group of phosphorous acid.

Examples of the phosphorous acid and the metal salt thereof include phosphorous acid, sodium hydrogen phosphite, ammonium hydrogen phosphite, potassium hydrogen phosphite, sodium dihydrogen phosphite, sodium phosphite, lithium phosphite, potassium phosphite, magnesium phosphite, calcium phosphite, triethyl phosphite, triphenyl phosphite, and pyrophosphorous acid, and combinations of two or more selected from these, with sodium hydrogen phosphite being preferable. As a result, alkali metal ions can also be introduced into the cellulose fibers. The amount of phosphorous acid or a metal salt thereof added is preferably 1 to 10,000 g, more preferably 100 to 5,000 g, still more preferably 300 to 1,500 g, relative to 1 kg of the unmodified cellulose fibers. In addition to phosphorous acid and its metal salts, alkali metal ion-containing substances (for example, hydroxides, metal sulfates, metal nitrates, metal chlorides, metal phosphates, and metal carbonates) may further be added to the reaction system.

Furthermore, urea or a derivative thereof may be further added to the reaction system. As a result, carbamate groups can also be introduced into the cellulose fibers. Examples of the urea and the urea derivative may include urea, thiourea, biuret, phenylurea, benzylurea, dimethylurea, diethylurea, tetramethylurea, and combinations of two or more selected from these, with urea being preferable. The amounts of the urea and the urea derivative added are preferably 0.01 to 100 mol, more preferably 0.2 to 20 mol, still more preferably 0.5 to 10 mol, relative to 1 mol of the phosphorous acid or its metal salt.

The reaction temperature is preferably 100 to 200°C, more preferably 100 to 180°C, even more preferably 100 to 170°C. When water is contained during the heat treatment, it is more preferable to heat the mixture at 130°C or lower (preferably 110°C or lower) to remove water therefrom, and then heat at 100 to 170°C. The reaction time is usually about 10 to 180 minutes, more preferably 30 to 120 minutes. The phosphorous acid-esterified cellulose fibers are preferably washed prior to defibration. The degree of substitution with phosphorous acid group per glucose unit is preferably 0.01 or more and less than 0.23.

- Esterification (sulfuric acid esterification) -

A third example of the method for producing esterified cellulose fibers may include sulfuric acid-esterified cellulose fibers. A sulfuric acid-esterified cellulose usually has a structure in which at least one carbon atom constituting a cellulose molecular chain (for example, a carbon atom that has a primary hydroxyl group at a C6 position and that constitutes a glucopyranose unit) is phosphorylated.

The amount of sulfuric acid-based group per glucose unit in the sulfuric acid-esterified cellulose fibers (hereinafter simply referred to as the "amount of sulfuric acid group") is preferably 0.1 to 3.0 mmol/g. By introducing a cationic substituent into the cellulose raw material, the cellulose is electrically repelled from each other. Therefore, the cationized cellulose into which the cationic substituent is introduced can be easily nano-defibrated. When the degree of substitution with cation per glucose unit is 0.02 or more, nano-defibration can be sufficiently performed due to electrical repulsion between cellulose. On the other hand, when the degree of substitution with cation per glucose unit is 0.50 or less, swelling or dissolution can be suppressed, and a situation where it is not possible to obtain nanofibers can be prevented. In order to efficiently perform defibration, it is preferable to wash the cationized cellulose obtained above.

The amount of sulfuric acid group per glucose unit may be measured by the following method. An aqueous dispersion of the sulfuric acid-esterified CNF is solvent-substituted with ethanol and t-butanol in this order, and then freeze-dried. To 200 mg of the obtained sample, 15 ml of ethanol and 5 ml of water are added and stirred for 30 minutes. After that, 10 ml of a 0.5N aqueous sodium hydroxide solution is added thereto, stirred at 70°C for 30 minutes, and further stirred at 30°C for 24 hours. Phenolphthalein is then added as an indicator, and titration with hydrochloric acid is performed. The amount of sulfuric acid group is calculated using the following formula:

Amount of sulfuric acid group [mmol/g sample] = (5 - (0.1 $\times$ amount of hydrochloric acid required for titration [ml] $\times$ 2)) / 0.2.

The amount of sulfuric acid group can be adjusted by controlling the reaction conditions such as the amount of the sulfuric acid-based compound added to be reacted.

Examples of the sulfuric acid-esterification method may include a method in which unmodified cellulose fibers are reacted with a sulfuric acid-based compound to introduce a sulfuric acid-based group derived from the sulfuric acid-based compound into the cellulose, thereby forming a sulfuric acid-esterified cellulose. Examples of the sulfuric acid-based compound may include sulfuric acid, sulfamic acid, chlorosulfonic acid, sulfur trioxide, and esters or salts thereof. Among these, sulfamic acid is preferably used because the cellulose has low solubility therein and the acid has a low acidity.

For example, when sulfamic acid is used as the sulfuric acid-based compound, the amount of sulfamic acid used can be appropriately adjusted in consideration of the amount of the anionic group to be introduced into the cellulose chain. For example, it is preferably 0.01 to 50 mol, more preferably 0.1 to 3.0 mol, per 1 mol of glucose unit in the cellulose molecule.

- Salt-type / Acid-type -

The esterified cellulose may contain more acid-type carboxy groups than salt-type carboxy groups, or may contain more salt-type carboxy groups than acid-type carboxy groups. Among the esterified celluloses, those that have not undergone a desalting treatment and those that have undergone a desalting treatment are called salt-type esterified celluloses and acid-type esterified celluloses, respectively. The salt-type esterified cellulose has mainly a salt-type carboxy group. It is presumed that the acid-type esterified cellulose would be more excellent in the reinforcing effect with the component C. The counter cation of the salt-type carboxy group and the preparation method thereof are as described

in the description of the oxidized cellulose.

- Cationization -

A cationized cellulose usually has a structure in which at least one carbon atom constituting a cellulose molecular chain (for example, a carbon atom that has a primary hydroxyl group at a C6 position and that constitutes a glucopyranose unit) is cationized, and usually includes a cation such as ammonium, phosphonium, or sulfonium, or a group having the cation in the molecule. The degree of substitution with cation per glucose unit in the cationized cellulose is preferably 0.02 to 0.50. The degree of substitution with cation per glucose unit may be measured by the following method. After cationized cellulose fibers are dried, the nitrogen content is measured using a total nitrogen analyzer (TN-10 manufactured by Mitsubishi Chemical Co., Ltd.), and the degree of substitution with cation (an average number of moles of substituent per mole of anhydroglucose unit) is calculated by the following formula:

$$\text{Degree of substitution with cation} = (162 \times N) / (1 - 151.6 \times N)$$

N: Nitrogen content.

The degree of substitution with cation can be adjusted by reaction conditions such as the amount of the cationizing agent added to be reacted, the composition ratio of water or an alcohol of 1 to 4 carbon atoms, and the like.

Examples of methods of cationization may include a method of reacting unmodified cellulose fibers with a cationizing agent (for example, glycidyltrimethyl ammonium chloride, 3-chloro-2-hydroxypropyltrialkyl ammonium hydride, or a halohydrin thereof) and a catalytic alkali metal hydroxide (for example, sodium hydroxide, or potassium hydroxide) in the presence of water and/or an alcohol of 1 to 4 carbon atoms. By using any of the above-exemplified cationizing agents, a cationized cellulose having a group containing quaternary ammonium can be obtained. The cationization reaction is usually carried out in the presence of water or an alcohol.

The amount of the cationizing agent is preferably 5 parts by mass or more, more preferably 10 parts by mass or more, relative to 100 parts by mass of the cellulose raw material. The upper limit of the amount is usually 800 parts by mass or less, preferably 500 parts by mass or less.

Examples of the catalyst used as necessary in the cationization may include alkali metal hydroxides such as sodium hydroxide and potassium hydroxide. The amount of the catalyst is preferably 0.5 parts by mass or more, more preferably 1 part by mass or more, relative to 100 parts by mass of the cellulose raw material. The upper limit of the amount is usually 7 parts by mass or less, preferably 3 parts by mass or less.

- Base-type cationized cellulose fiber -

The cationized cellulose fibers after cationization are preferably converted by desalting into a base-type cationized cellulose or base-type cationized cellulose nanofibers. Desalting can convert the salt in the cationized cellulose to a base. In the present description, a cationized cellulose (nanofibers) that has undergone desalting is referred to as a base-type cationized cellulose (nanofibers) or a cationized cellulose (nanofibers) (base-type). A cationized cellulose and cationized cellulose nanofibers that have not undergone desalting are referred to as a salt-type cationized cellulose (nanofibers) or a cationized cellulose (nanofibers) (salt-type). Desalting may be performed at any time point before defibration (cationized cellulose) and after defibration (cationized cellulose nanofibers), which will be described later. Desalting means that the salt (for example, $Cl^-$) contained in the cationized cellulose (salt-type) and the cationized cellulose nanofibers (salt-type) is replaced with a base to form a base type. Examples of the desalting method after cationization may include a method in which a cationized cellulose or cationized cellulose nanofibers are brought into contact with an anion-exchange resin. As the anion-exchange resin, any of a strongly basic ion-exchange resin and a weakly basic ion-exchange resin can be used as long as the counter ion is OH-. When the modified cellulose is brought into contact with the anion-exchange resin, the ratio of the modified cellulose to the anion-exchange resin is not particularly limited, and a person skilled in the art can appropriately set the ratio from the viewpoint of efficiently performing cation substitution. For instance, the ratio can be adjusted in such a manner that the pH of the aqueous dispersion after adding the anion-exchange resin to the cationized cellulose nanofiber aqueous dispersion becomes preferably 8 to 13, more preferably 9 to 13. Recovery of the anion-exchange resin after the contact may be performed by a conventional method such as suction filtration.

<Micronization (defibration or fibrillation)>

The micronization is generally performed by mechanical treatment. The mechanical treatment (preferably a beating or disaggregation treatment) is generally performed in a wet state (that is, in a form of an aqueous dispersion of cellulose fibers). Examples of an apparatus for use in the mechanical treatment may include, but not particular limited to,

apparatuses capable of applying a mechanical defibrating force such as a purification apparatus (refiner; for example, disc refiner, conical refiner, and cylinder refiner), a high-speed defibrator, a shear stirrer, a colloid mill, a high-pressure jet dispersing machine, a beater, a PFI mill, a kneader, a disperser, a high-speed disintegrator (Top Finer), a high-pressure or ultra-high-pressure homogenizer, a grinder (mill stone type grinder), a ball mill, a vibration mill, a bead mill, a single, double, or multi-screw kneader/extruder, a homomixer by high-speed rotation, a refiner, a defibrator, a friction grinder, a high-shear defibrator, a disperger, and a homogenizer (for example, microfluidizer). An apparatus capable of applying a defibrating force in a wet state is preferable, and a high-speed disintegrator and a refiner are more preferable.

When defibration is performed in a wet state, an aqueous dispersion of cellulose fibers is generally prepared. The solid concentration of modified cellulose in the aqueous dispersion is preferably 0.1% by mass or more, more preferably 0.5% by mass or more, further preferably 1.0% by mass or more, still further preferably 1.5% by mass or more. The upper limit of the concentration is preferably 15% by mass or less, more preferably 10% by mass or less, further preferably 8% by mass or less. In a mechanical treatment, pH adjustment (for example, to 7 or less, 6 or less, or 5 or less) may also be performed, as necessary.

Prior to the preparation of the aqueous dispersion, a pre-treatment such as dry grinding (for example, grinding after drying) may be performed. Examples of an apparatus for use in dry grinding may include, but not particularly limited to, impact mills such as a hammer mill and a pin mill, medium mills such as a ball mill and a tower mill, and a jet mill. A post-treatment may also be performed after defibration. Examples of the post-treatment may include, but not particularly limited to, drying (for example, a freeze-drying method, a spray-drying method, a shelf-type drying method, a drum drying method, a belt drying method, a drying method including thinly extending on a glass plate or the like, a fluidized-bed drying method, a microwave drying method, a heat-generating-fan drying method under reduced pressure, and drying under reduced pressure (deaeration)), redispersion in water (a dispersion apparatus is not limited), and grinding (for example, grinding with a machine such as a cutter mill, a hammer mill, a pin mill, or a jet mill).

<Optional post-treatment>

The fine cellulose fibers may be in a state of an aqueous dispersion obtained after production, or subjected to a post-treatment, as necessary. Examples of the post-treatment may include, but not particularly limited to, drying (for example, a freeze-drying method, a spray-drying method, a shelf-type drying method, a drum drying method, a belt drying method, a drying method including thinly extending on a glass plate or the like, a fluidized-bed drying method, a microwave drying method, and a heat-generating-fan drying method under reduced pressure), redispersion in water (a dispersion apparatus is not limited), and grinding (for example, grinding with a machine such as a cutter mill, a hammer mill, a pin mill, or a jet mill).

<Physical properties of fine cellulose fibers>

The fine cellulose fibers preferably have the following physical properties.

- Specific surface area -

The BET specific surface area of the fine cellulose fibers is preferably 25 $m^2/g$ or more, more preferably 50 $m^2/g$ or more, still more preferably 100 $m^2/g$ or more. A BET specific surface area may be measured with a BET specific surface area meter in accordance with a nitrogen gas-adsorption method (JIS Z 8830) using a sample obtained by replacing an aqueous dispersion with t-BuOH and lyophilizing it.

- Crystallization degree of type I cellulose -

The crystallization degree of the type I cellulose in the fine cellulose fibers is usually 50% or more, preferably 60% or more. The upper limit is not particularly limited, and is actually considered to be about 90%. The crystallizability of the cellulose can be controlled by the degree of chemical modification. The crystallization degree of type I cellulose may be calculated by performing X-ray diffraction measurement of a sample, and measuring and comparing the intensity at the (200) peak around 22.6° and that at the valley between (200) and (110) (around 18.5°). When the fine cellulose fibers contain type II crystals, it is preferable to separate the peaks (around 12.3°, 20.2°, and 21.9°) based on type II crystals and then calculate the intensity of the type I crystals.

- Viscosity -

When the fine cellulose fibers are prepared as an aqueous dispersion, the viscosity of the aqueous dispersion is preferably low. This low viscosity may result in a material having good handling properties despite being fibrillated. For

example, the B-type viscosity (25°C, 60 rpm) of an aqueous dispersion with a solid content of 1% by mass is usually 6,000 mPa·s or less or 5,000 mPa·s or less, preferably 4,500 mPa·s or less, more preferably 4,000 mPa·s or less. The lower limit value is preferably 10 mPa·s or more, more preferably 20 mPa·s or more, still more preferably 50 mPa·s or more, 100 mPa or more, 500 mPa or more, 1,000 mPa or more or 2,000 mPa or more. The B-type viscosity may be measured, for example, by the following method. After fibrillation (for example, defibration), a sample is allowed to stand for 1 day or longer, and is diluted as necessary. After stirred with a homodisper (for example, at 3000 rpm for 5 min.), a viscosity is measured (the viscosity is measured after rotation at 60 rpm for 3 minutes).

- Degree of anionization -

When the fine cellulose fibers are modified cellulose microfibrils, the degree of anionization (anionic charge-density) thereof is usually 2.50 meq/g or less, preferably 2.30 meq/g or less, more preferably 2.0 meq/g or less, even more preferably 1.50 meq/g or less. As a result, it is considered that the chemical modification is uniformly performed over the entire cellulose as compared with the cellulose fibers having a higher degree of anionization. Furthermore, it is considered that the effect, which is specific to the chemically modified cellulose fibers, such as water retention can be obtained more stably. The lower limit is usually 0.06 meq/g or more, preferably 0.10 meq/g or more, more preferably 0.30 meq/g or more, and is not particularly limited. Therefore, the degree of anionization is preferably 0.06 meq/g or more and 2.50 meq/g or less, more preferably 0.08 meq/g or more and 2.50 meq/g or less or 0.10 meq/g or more and 2.30 meq/g or less, even more preferably 0.10 meq/g or more and 2.00 meq/g or less. The degree of anionization is an equivalent weight of anions per unit mass of modified cellulose microfibrils and can be calculated from the equivalent weight of diallyldimethylammonium chloride (DADMAC) required to neutralize anionic groups in unit mass of modified cellulose microfibrils.

- Water-holding capacity -

When the fine cellulose fibers are cellulose microfibrils, the water-holding capacity thereof is preferably 10 or more, more preferably 15 or more, still more preferably 20 or more, even more preferably 30 or more. The upper limit is actually considered to be about 200 or less, but is not particularly limited. The water-holding capacity corresponds to the mass of water in the sediment relative to the mass of solids of the fibers in the sediment, and is the ratio of water content/solids content in the sediment gel measured and calculated by centrifuging a 0.3mass% aqueous dispersion of the fibers with 25,000 G. That is, the water-holding capacity is calculated by the following formula:

$$\text{Water-holding capacity} = (B + C - 0.003 \times A) / (0.003 \times A - C)$$

A: Mass of an aqueous dispersion having a solid concentration of 0.3% by mass of cellulose microfibrils
B: Mass of sediment to be separated after centrifuging an aqueous dispersion of mass A at 30°C with 25,000 G for 30 minutes
C: Mass of solids in the aqueous phase separated after the centrifugation

The higher the value of the water-holding capacity, the higher the ability of the fibers to holds water. The water-holding capacity may be measured or calculated for fibrillated fibers, but cannot usually be measured for non-fibrillated or non- defibrated fibers and cellulose nanofibers that have been fibrillated to single microfibrils. Centrifugation of non-fibrillated or non-defibrated cellulose fibers under the conditions described above prevents the formation of a dense sediment, making it difficult to separate the sediment from the aqueous phase. Centrifugation of cellulose nanofibers under the conditions described above usually results in little sedimentation.

- Fibrillation rate -

When the fine cellulose fibers are cellulose microfibrils, the fibrillation ratio (Fibrillation %) thereof is preferably 1.0% or more, more preferably 1.2% or more, still more preferably 1.5% or more. Thus, it can be confirmed that fibrillation is sufficiently performed. The fibrillation ratio can be adjusted by the type of cellulose-based raw material used. The fibrillation ratio may be determined by an image analysis type fiber analyzer such as a fractionator manufactured by Valmet K.K.

- Electrical conductivity -

When the fine cellulose fibers are cellulose microfibrils, the electrical conductivity of the aqueous dispersion thereof (solid concentration of 1.0% by mass) is preferably 500 mS/m or less, more preferably 300 mS/m or less, still more

preferably 200 mS/m or less, even more preferably 100 mS/m or less, especially preferably 70 mS/m or less. The lower limit is preferably 5 mS/m or more, more preferably 10 mS/m or more. The electrical conductivity may be measured by preparing 200 g of an aqueous dispersion of cellulose microfibrils with a solid concentration of 1.0% by mass and by using an electrical conductivity meter (ES-71 type manufactured by HORIBA, Ltd.).

<1.3 Component C: Cross-linkable compound>

The component C is a cross-linkable compound. The cross-linkable compound has a thiosulfuric acid group or an α,β-unsaturated carbonyl group, and an amino group.

<Thiosulfuric acid group>

The thiosulfuric acid group may be an acid-type ($-SSO_3H$) or a salt-type ($-SSO_3^-$). Examples of the counter cation for the salt-type may include an alkali metal such as sodium, lithium, calcium, and cesium, and a quaternary ammonium salt such as $N(R^6)_4^-$ ($R^6$ may be the same as, or different from, each other, and is a hydrogen atom or an organic group such as an alkyl group and an ammonium group. The same shall apply hereinafter).

<α,β-unsaturated carbonyl group>

Examples of the α,β-unsaturated carbonyl group may include groups represented by the formula (1):

<Chemical formula 1>

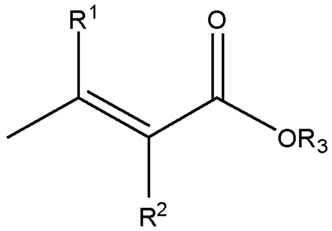

...(1)

.

In the formula, $R^1$ and $R^2$ each independently represent a hydrogen atom, a halogen atom, a hydroxyl group, an alkoxy group, or a hydrocarbon group, and $R^1$ and $R^2$ may be bonded to each other. Preferably, either $R^1$ or $R^2$ is a hydrogen atom, more preferably both are a hydrogen atom. $R^3$ is a counter ion, and examples thereof may include an alkali metal such as sodium, lithium, calcium, and cesium, and a quaternary ammonium salt such as $N(R^6)_4^-$.

<Amino group>

The amino group is a group represented by the following formula (2):

<Chemical formula 2>

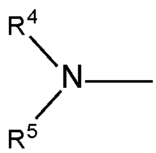

...(2)

.

In the formula, $R^4$ and $R^5$ each independently represent a hydrogen atom or an alkyl group of 1 to 6 carbon atoms. At least either one of $R^4$ and $R^5$ is preferably a hydrogen atom, and both are more preferably a hydrogen atom ($-NH_2$).

<Spacer>

Examples of spacers that link the thiosulfuric acid group or the α,β-unsaturated carbonyl group to the amino group may include an alkyl group, and a divalent group including an aromatic ring and an amide bond. A spacer that links the thiosulfuric acid group to the amino group is preferably an alkyl group, more preferably an alkyl group of 1 to 6 carbon atoms, further more preferably an alkyl group of 2 to 5 carbon atoms. As the spacer that links the α,β-unsaturated carbonyl

group to the amino group, a divalent group including an aromatic ring and an amide bond is preferable.

<Preferred example of cross-linkable compound>

As the cross-linkable compound, S-(3-aminopropyl)thiosulfuric acid and (2Z)-4-[(4-aminophenyl)amino]-4-oxo-2-butenoic acid (for example, sodium salt) are preferable. The respective structural formulas are shown in the following formulas (3) and (4).

<Chemical formula 3>

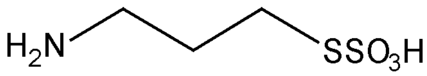

...(3)

<Chemical formula 4>

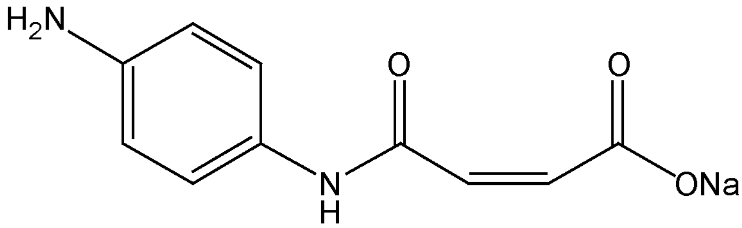

...(4)

As the component C, one type thereof may be solely used, and two or more types thereof may also be used in combination.

From the viewpoint of further enhancing the strength of the obtained rubber composition, it is preferable to include a cross-linkable compound containing a thiosulfuric acid group, and it is more preferable to include a compound represented by the above-mentioned formula (3). The reason why the compound of the formula (3) is more preferable is not clear, but is as follows. Since the cross-linkable compound of the component C mainly reacts with OH groups in the cellulose structure of the component B as a cross-linking point, it is presumed that the compound of the formula (3) having relatively little steric hindrance can correspond to the component B having various structures and easily react with the cross-linking point.

<1.4 Optional component>

The rubber composition may further contain one or two or more types of optional components according to demand for application of the rubber composition, or the like. Examples of the optional component may include compounding agents usable in rubber industry, such as a reinforcing agent (for example, silica and carbon black), a filler other than the cellulose filler (for example, calcium carbonate and clay), a silane-coupling agent, a cross-linking agent, a vulcanization accelerator, a vulcanization accelerate aid (for example, zinc oxide and stearic acid), oil, a hardening resin, a wax, an age resistor, a colorant, and a foaming agent. Among these, the vulcanization accelerator and the vulcanization accelerate aid are preferable. The content of the optional component may be appropriately determined according to conditions such as the type of the optional component, and is not particularly limited.

When the rubber composition is an unvulcanized rubber composition or a finished product, it is preferable that at least a cross-linking agent be contained as the optional component. Examples of the cross-linking agent may include a sulfur compound such as sulfur and halogenated sulfur, an organic peroxide, quinone dioximes, an organic polyvalent amine compound, and an alkyl phenol resin having a methylol group. Among these, sulfur is preferable.

Examples of the vulcanization accelerator may include: a guanidine-based vulcanization accelerator such as diphenylguanidine (DPG), a thiazol-based vulcanization accelerator such as di-2-benzothiazolyl disulfide (MBTS) and 2-mercaptobenzothiazol (MBT), a sulfenamide-based vulcanization accelerator such as N-cyclohexyl-2-benzothiazolylsulfenamide (CBS), N-tert-butyl-2-benzothiazolylsulfenamide (BBS), N-oxydiethylene-2-benzothiazolylsulfenamide (OBS), and N,N-dicyclohexyl-2-benzothiazolylsulfenamide (DZ), a thiourea-based vulcanization accelerator such as ethylene thiourea (EU), diethylthiourea (EUR), and trimethylthiourea (TMU), a thiuram-based vulcanization accelerator such as tetramethylthiuram monosulfide (TMTM) and tetramethylthiuram disulfide (TMTD), a thiocarbamic acid-based vulcanization accelerator such as zinc dimethyldithiocarbamate (ZnMDC) and zinc di-n-butyldithiocarbamate (ZnBDC), and a xanthogenate-based vulcanization accelerator such as zinc isopropylxanthogenate (ZIX). These may be solely used or two or more types thereof may also be used in combination.

<1.5 Content of each component>

The content ratios of the components A to C are as follows, for example.

<Content of component B relative to component A>

The content of the component B is usually 1 part by weight or more, 3 parts by weight or more or 5 parts by weight or more, preferably 10 parts by weight or more, more preferably 20 parts by weight or more, relative to 100 parts by weight of the component A. The upper limit is usually 50 parts by weight or less or 40 parts by weight or less, preferably 35 parts by weight or less, more preferably 30 parts by weight or less, still more preferably 25 parts by weight or less. Therefore, the content of the component B is usually 1 to 50 parts by weight, 3 to 50 parts by weight, 5 to 50 parts by weight or 10 to 30 parts by weight, preferably 5 to 30 parts by weight or 10 to 25 parts by weight, relative to 100 parts by weight of the component A.

<Content of component C relative to component B>

The content of the component C is usually 0.1 parts by weight or more, preferably 0.5 parts by weight or more, more preferably 1 part by weight or more, relative to 100 parts by weight of the component A. The upper limit is usually 50 parts by weight or less, preferably 20 parts by weight or less, more preferably 10 parts by weight or less. Therefore, the content of the component C is usually 0.5 to 50 parts by weight, preferably 0.7 to 20 parts by weight, more preferably 1 to 10 parts by weight, relative to 100 parts by weight of the component A.

<Amount of optional components used>

The content of the cross-linking agent is preferably 0.1 parts by mass or more, more preferably 0.3 parts by mass or more, still more preferably 0.5 parts by mass or more, relative to 100 parts by mass of the component A. The upper limit is preferably 10 parts by mass or less, more preferably 7 parts by mass or less, even more preferably 5 parts by mass or less.
The content of the vulcanization accelerator is preferably 0.1 parts by mass or more, more preferably 0.3 parts by mass or more, still more preferably 0.4 parts by mass or more, relative to 100 parts by mass of the component A. The upper limit is preferably 20 parts by mass or less, more preferably 15 parts by mass or less, even more preferably 10 parts by mass or less.

<2. Production method>

Examples of a production method of the rubber composition may include a method including a step of kneading the components A to C. The amounts of the respective components are as described above. During mixing of the components A to C, the optional component may be added, as necessary, at the same time as the mixing, during the mixing, or after mixing, and a cross-linking agent and a granulation accelerator are preferably added after the components A to C are mixed and kneaded.
The form of the component A to be mixed is not particularly limited. Examples thereof may include a solid body of the rubber component, a dispersion (latex) in which the rubber component is dispersed in a dispersion medium, and a solution in which the rubber component is dissolved in a solvent. Examples of the dispersion medium and the solvent (hereinafter collectively also referred to as "liquid") may include water and an organic solvent. The amount of the liquid is preferably 10 to 1,000 parts by mass relative to 100 parts by mass of a rubber solid content (when two or more rubber components are used, the total amount thereof is used).
The components A to C may be mixed, as necessary, prior to kneading. In a case of a solution, mixing can be performed using a publicly known apparatus such as a homomixer, a homogenizer, or a propeller stirrer. The mixing temperature is not limited, and is preferably room temperature (20 to 30°C). The mixing time may be appropriately adjusted.
The components A to C may be dried, as necessary, prior to kneading. A drying method is not particularly limited, and may be any of a heating method, a solidification method, or a combination thereof. A heating treatment is preferable. The conditions of the heating treatment are not particularly limited, and an example thereof is as follows. The heating temperature is preferably 40°C or higher and lower than 100°C. The treatment time is preferably 1 to 24 hours. When the heating temperature or the heating time satisfies the aforementioned conditions, damage to the rubber component can be reduced. The mixture after drying may be in an absolute dry state, or the solvent may remain. The drying method is not limited to the aforementioned method, and a conventionally known method for removing the solvent may be appropriately selected.
The form of the component B to be kneaded is not particularly limited. Examples thereof may include an aqueous dispersion of the cellulose-based filler, a dry solid body of the aqueous dispersion, and a wet solid body of the aqueous

dispersion. When the dispersion medium is water, the concentration of the cellulose-based filler in the aqueous dispersion may be 0.1 to 5% (w/v). When the dispersion medium contains water and an organic solvent such as alcohol, the concentration may be 0.1 to 20% (w/v). The wet solid body as used herein is a solid body in an intermediate state between the aqueous dispersion and the dry solid body. The amount of the dispersion medium in the wet solid body obtained by dehydrating the aqueous dispersion by a general method is preferably 5 to 15% by mass relative to the total amount of the solid body. The amount of the dispersion medium in the wet solid body can be appropriately adjusted by addition of the liquid or additional drying.

In kneading the mixture, a kneader may be used in accordance with a publicly known method. Examples of the kneader may include an open kneader such as a two-roll or three-roll kneader, and a close kneader such as an intermeshing Banbury mixer, a tangential Banbury mixer, and a pressure kneader. The kneading may be performed in a plurality of stages. Examples thereof may include a combination of kneading with a close kneader in a first stage and substantial kneading with an open kneader.

The kneading time is generally about 3 to 20 minutes. A time required for uniform kneading can be appropriately selected. The kneading temperature may be normal temperature (for example, about 15 to 30°C), but the mixture may be heated to certain high temperature. For example, the upper limit of the temperature is generally 150°C or lower, preferably 140°C or lower, more preferably 130°C or lower. The lower limit of the temperature is 15°C or higher, preferably 20°C or higher, more preferably 30°C or higher. The kneading temperature is preferably 15 to 150°C, more preferably 20 to 140°C, further preferably 30 to 130°C.

The resultant kneaded mixture is preferably utilized as a masterbatch as it is. Alternatively, the resultant kneaded mixture may be utilized as a finished product. When the kneaded mixture is utilized as a finished product, it is preferable that to the kneaded mixture, an optional additive such as a rubber component, a cross-linking agent, or a vulcanization aid be further added, followed by additional kneading.

After completion of the kneading, molding may be performed, as necessary. Examples of the molding may include mold molding, injection molding, extrusion molding, blow molding, and foam molding. An apparatus may be appropriately selected according to the shape or application of the finished product, or the molding method.

After the completion of the kneading, preferably after the molding, further heating is preferable. When the rubber composition contains a cross-linking agent (preferably contains a cross-linking agent and a vulcanization accelerator), a cross-linking (vulcanization) treatment is performed by heating. Even when the rubber composition does not contain a cross-linking agent or a vulcanization accelerator, the same effect can be obtained by further adding the cross-linking agent and the vulcanization accelerator followed by heating. The heating temperature is preferably 150°C or higher, and the upper limit thereof is preferably 200°C or lower, more preferably 180°C or lower. Therefore, the heating temperature is preferably about 150 to 200°C, more preferably about 150 to 180°C. Examples of a heating apparatus may include vulcanizers for mold cure, for can cure, for continuous cure, and for injection-mold cure.

The kneaded mixture may be subjected to a finishing treatment, as necessary, before a finished product is obtained. Examples of the finishing treatment may include polishing, surface finishing, lip finishing, lip cut, and chlorination. One of these treatments may be performed alone, or a combination of two or more thereof may be performed.

<3. Application of rubber composition>

The application of the rubber composition is not particularly limited as long as the rubber composition is a composition for obtaining a rubber product as a finished product. Specifically, the rubber composition may be used as an intermediate (masterbatch) for rubber production, an unvulcanized rubber composition containing a vulcanizing agent, or a rubber product that is the finished product.

The application of the finished product is not particularly limited, and examples thereof may include transportations as an automobile, a train, a ship, and an airplane (for example, tire and vibration absorbing rubber); appliances such as a personal computer, a television, a telephone, and a clock; mobile communication equipment such as a cell phone; a portable music player, a video player, a printer, a copying machine, a sporting good; a building material (for example, base-isolated rubber); office supplies such as a stationery; a vessel; and a container. In addition, the finished product is applicable to members including rubber or flexible plastic.

<Example>

Hereinafter, the present invention will be specifically described by illustrating Examples and Comparative example. However, the present invention is not limited to those described below. Note that "part" and "%" are parts by mass and % by mass, unless otherwise specified.

(Production example 1)

Pulp derived from hardwood was reacted at 95°C for 2 hours under conditions of a pulp concentration of 5.5% and an adjusted hydrochloric acid concentration of 1.2 N. After completion of the reaction, the reaction product was neutralized with sodium hydroxide, sufficiently washed with water, and dried with air for about one day under a temperature condition of 60°C. The dried sample was mechanically ground with a hammer mill (AP-S, manufactured by Hosokawa Micron Corporation) into a powder, and secondary grinding was performed, to obtain finely powdered cellulose 1 (average particle diameter: 9.3 μm, average degree of polymerization: 269, crystallization degree: 86%, average fiber length: 0.1 mm, average fiber width: 22.7 μm, apparent specific gravity: 0.4 g/ml, water content: 3.4%).

Example 1

Natural rubber (NR), the powdered cellulose 1, and S-(3-aminopropyl)thiosulfuric acid (SUMILINK (registered trademark) 100, manufactured by Sumitomo Chemical Co., Ltd.) were kneaded at 80°C for 5 minutes with a close kneader (Labo Plastomill manufactured by Toyo Seiki Seisaku-sho, Ltd.), and after starting the kneading, the temperature was gradually increased to 130°C. Subsequently, stearic acid and zinc oxide were added, and then kneaded with the close kneader for 3 minutes. Furthermore, sulfur and a vulcanization accelerator (N-oxydiethylene-2-benzothiazolyl sulfenamide) were added, and kneaded with a roll kneader. A vulcanization tester was used to determine vulcanization properties. After the appropriate vulcanization time was determined, molding under thermal compression and vulcanization was performed at 150°C for a predetermined time (tc(90) in Table 2), to obtain a sheet having a thickness of 2 mm.

Comparative example 1

The same procedures were performed except that S-(3-aminopropyl)thiosulfuric acid in Example 1 was not used.

Comparative example 2

The same procedures were performed except that powdered cellulose and S-(3-aminopropyl)thiosulfuric acid in Example 1 were not used.

Blending ratios of respective raw materials in Example 1 and Comparative examples 1 to 2 are shown in Table 1. Evaluation results of respective examples were shown in Table 2.

<Table 1>

| Table 1 Table of blending (unit: part) | | | |
|---|---|---|---|
| | Example 1 | Comparative example 1 | Comparative example 2 |
| NR | 100 | 100 | 100 |
| Powdered cellulose | 30 | 30 | 0 |
| SUMILINK (registered trademark) 100 | 1 | 0 | 0 |
| Stearic acid | 0.5 | 0.5 | 0.5 |
| Zinc oxide | 6 | 6 | 6 |
| Sulfur | 3.5 | 3.5 | 3.5 |
| Vulcanization accelerator | 0.7 | 0.7 | 0.7 |

<Evaluation method>

- Vulcanization test -

The vulcanization properties (optimal vulcanization time (tc90)) were determined in accordance with JIS K6300-2:2001.

- Measurement of hardness -

The durometer hardness was measured in accordance with JIS K6253-3:2012.

- Tensile test -

The 50% tensile stress (M50), the strength at break, and the elongation at break were measured in accordance with JIS K6251:2017.

- Dynamic viscoelasticity test -

The dynamic properties were determined in accordance with JIS K6394:2017. Specifically, the modulus of elasticity at 23°C and the loss factor tanδ at 60°C were measured with a dynamic viscoelastometer (DMA7100 manufactured by Hitachi High-Tech Science Corporation) using a tensile mode at a frequency of 10 Hz and a temperature range of -50 to 100°C.

- Measurement of specific surface area -

(1) An aqueous dispersion containing about 2% modified cellulose microfibrils was taken such that the solid content was about 0.1 g, and placed in a centrifuge container, and 100 ml of ethanol was added.
(2) A stirring bar was placed in the container, and stirring was performed at 500 rpm for 30 minutes or more.
(3) The stirring bar was taken out, and the modified cellulose microfibrils was sedimented with a centrifugal separator under conditions of 7000 G, 30 minutes, and 30°C.
(4) The supernatant was removed while the modified cellulose microfibrils were not removed as much as possible.
(5) Addition of 100 ml of ethanol, addition of a stirring bar, stirring under the conditions in (2), centrifugation under the conditions in (3), and removal of the supernatant under the conditions in (4) were repeated three times.
(6) The solvent in (5) was changed from ethanol to t-butanol, and stirring, centrifugation, and removal of the supernatant were repeated in the same manner as in (5) three times at room temperature that was equal to or higher than the melting point of t-butanol.
(7) After the last removal of the solvent, 30 ml of t-butanol was added and slightly stirred, and the resultant was transferred to an eggplant type flask, and frozen in an ice bath.
(8) The resultant was cooled in a freezer for 30 minutes or more.
(9) The resultant was placed in a freeze-dryer, and freeze-dried for 3 days.
(10) BET measurement was performed (pre-treatment conditions: under nitrogen flow, 105°C, 2 hours, relative pressure: 0.01 to 0.30, the amount of sample: about 30 mg).

- Measurement of crystallization degree of type I cellulose -

A sample is placed on a glass cell, and the measurement is performed with an X-ray diffraction measurement apparatus (for example, LabX XRD-6000, manufactured by Shimadzu Corporation). The crystallization degree is calculated by a procedure of Segal, et al. For example, the crystallization degree is calculated by the following expression from the diffraction intensity of a 002 plane at 2Θ = 22.6° and the diffraction intensity of an amorphous portion at 2Θ = 18.5° when the diffraction intensity at 2Θ = 10° to 30° was used as a baseline in an X-ray diffraction chart.

$$Xc = (I_{002C} - Ia) / I_{002C} \times 100$$

Xc: crystallization degree of type I cellulose (%)
$I_{002C}$: diffraction intensity of 002 plane 2Θ = 22.6°
Ia: diffraction intensity of amorphous portion 2Θ =18.5°

As a sample for measurement of crystallization degree, a freeze-dried sample prepared by the same procedure as the procedure of (1) to (9) in the latter part of Measurement of specific surface area was molded into a tablet shape for use.

- Measurement of B-type viscosity (25°C, 60 rpm)

After defibration, the sample was allowed to stand for 1 day or more, diluted such that a solid content was 1%, and stirred with a homodisper at 3,000 rpm for 5 minutes, the measurement of its viscosity (60 rpm) was initiated, and the value of viscosity after 3 minutes was recorded.

- Measurement of dynamic-to-static modulus ratio

(1) Each of the vulcanized rubber sheets having a thickness of 2 mm was cut to obtain a strip-shaped specimen having a width of about 5 mm and a length of about 30 mm.
(2) The storage modulus of elasticity E' (100 Hz*0.05%) at a frequency of 100 Hz and a strain of 0.05%, and the storage modulus of elasticity E'(0.1 Hz*1%) at a frequency of 0.1 Hz and a strain of 1% of the respective specimens were each measured at room temperature (23°C) with a dynamic viscoelastometer (DMA7100 manufactured by Hitachi High-Tech Science Corporation).
(3) From the measured values obtained in (2), the dynamic-to-static modulus ratio was calculated by the following expression.

Dynamic-to-static modulus ratio = E'(100 Hz*0.05%) / E' (0.1 Hz*1%)

- Measurement of fibrous properties -

Average fiber width and average fiber length: For an aqueous dispersion obtained by dilution to a solid concentration of 0.25% by mass, the average fiver width and the average fiver length were determined as a length-weighted fiber width and a length-weighted average fiber length, respectively, with a fractionator (n = 2).
Aspect ratio: From the measured values of the fiber width and the fiber length, the aspect ratio was calculated by the following expression.

Aspect ratio = average fiber length / average fiber diameter

- Measurement of water-holding capacity -

An aqueous dispersion having a solid concentration of 0.3% by mass of modified cellulose microfibrils was prepared in an amount of 40 mL. The mass of the aqueous dispersion at that time was represented by A. Subsequently, the total amount of the aqueous dispersion was centrifuged with a high-speed cooling centrifuge at 30°C and 25,000 G for 30 minutes, to separate an aqueous phase from a sediment. The mass of the sediment at that time was represented by B. The aqueous phase was placed in an aluminum cup and dried at 105°C all day and night, to remove water, and the mass of the solid content in the aqueous phase was measured. The mass of the solid content in the aqueous phase was represented by C. The water-holding capacity was calculated by the following expression.

Water-holding capacity = $(B + C - 0.003 \times A) / (0.003 \times A - C)$

- Measurement of fibrillation ratio -

The fibrillation ratio was measured with a fractionator manufactured by Valmet K.K.

- Method for measuring degree of anionization -

Modified cellulose microfibrils were dispersed in water to prepare an aqueous dispersion having a solid content of 10 g/L, and the aqueous dispersion was stirred with a magnetic stirrer at 1,000 rpm for 10 minutes or longer. The resultant aqueous dispersion was diluted to 0.1 g/L, 10 mL of the diluted aqueous dispersion was collected and titrated with diallyldimethylammonium chloride (DADMAC) having a normality of 1/1000 using a streaming current detector (Mutek Particle Charge Detector 03), and from the amount of DADMAC added until the streaming current was zero, the degree of anionization was calculated by the following expression:

$$q = (V \times c) / m$$

q: degree of anionization (meq/g)
V: amount (L) of DADMAC added until streaming current is zero
c: concentration (meq/L) of DADMAC
m: Mass (g) of modified cellulose microfibrils in measurement sample

- Method for measuring electrical conductivity -

200 g of an aqueous dispersion having a solid concentration of 1.0% by mass of the sample was prepared and sufficiently stirred. Next, the electrical conductivity was measured with a conductivity meter (Model ES-71 manufactured by HORIBA Ltd.).

<Table 2>

Table 2
Results of physical properties test (indicated as an index when the result in Comparative example 2 is defined as 100)

| | Unit | Example 1 | Comparative example 1 | Comparative example 2 |
|---|---|---|---|---|
| tc(90) | min | 104 | 108 | 100 |
| Hardness | - | 150 | 134 | 100 |
| M50 | MPa | 356 | 234 | 100 |
| Strength at break | MPa | 120 | 93 | 100 |
| Elongation at break | % | 79 | 86 | 100 |
| Modulus of elasticity | MPa | 308 | 261 | 100 |
| $\tan\delta$ | - | 87 | 143 | 100 |
| Dynamic-to-static modulus ratio | - | 111 | 121 | 100 |

In Comparative example 1 (only powdered cellulose), the strength at break was lower than that in Comparative example 2, and $\tan\delta$ was higher than that in Comparative example 2, whereas in Example 1 (powdered cellulose and S-(3-aminopropyl)thiosulfuric acid), the strength at break was higher than that in Comparative example 2, and $\tan\delta$ was lower than that in Comparative example 2. This is considered to be because powdered cellulose is aggregated in rubber, and large interfacial peeling occurs. $\tan\delta$ is an indication of fuel consumption performance in application such as tire, and low $\tan\delta$ means excellent fuel consumption performance.

The hardness, M50, and modulus of elasticity in Example 1 were largely higher than those in Comparative examples 1 and 2.

Furthermore, there was little different in tc(90) between Comparative example 2 and Example 1. This shows that the addition of a cellulose-based filler and S-(3-aminopropyl)thiosulfuric acid hardly affects vulcanization properties.

The dynamic-to-static modulus ratio in Example 1 in which the cellulose-based filler and S-(3-aminopropyl)thiosulfuric acid were blended was lower than that in Comparative example 1 in which S-(3-aminopropyl)thiosulfuric acid was not blended. The dynamic-to-static modulus ratio generally tends to be increased by blending the filler for improving the modulus of elasticity of rubber. However, as obvious from the results in Example 1, a combination of the cellulose-based filler and the cross-linkable compound can enhance the strength while an increase in dynamic-to-static modulus ratio is suppressed.

(Production example 2)

5.00 g (absolute dry weight) of bleached and unbeaten kraft pulp (whiteness degree: 85%) derived from softwood was added to 500 mL of an aqueous solution obtained by dissolving 39 mg (0.05 mmol relative to 1 g of cellulose in an absolute dry state) of TEMPO (manufactured by Sigma Aldrich) and 514 mg (1.0 mmol relative to 1 g of cellulose in an absolute dry state) of sodium bromide, and the mixture was stirred until the pulp was uniformly dispersed. To the reaction system, an aqueous sodium hypochlorite solution was added such that the concentration of sodium hypochlorite became 5.5 mmol/g, and an oxidation reaction was initiated at room temperature. During the reaction, the pH in the system decreased, and therefore a 3M aqueous sodium hydroxide solution was sequentially added to adjust the pH to 10. At a time point when sodium hypochlorite was consumed and the pH in the system did not change, the reaction was terminated. The mixture after the reaction was filtered through a glass filter to separate the pulp, and the pulp was sufficiently washed with water, to obtain oxidized pulp (carboxylated cellulose). The pulp yield at that time was 90%, the time required for the oxidation reaction was 90 minutes, and the amount of carboxy group was 1.6 mmol/g. To the reaction mixture, water was added to adjust the concentration to 1.0% by mass (w/v), and the mixture was treated three times with an ultra-high-pressure homogenizer (20°C, 150 MPa), to obtain an oxidized cellulose nanofiber (TOCN) dispersion liquid 2. The average fiber diameter was 3 nm, the aspect ratio was 250, the crystallization degree of type I cellulose was 67.3%, the

BET specific surface area was 353 $m^2/g$, and the B-type viscosity (solid content 1wt% / 25°C / 60 rpm) was 3,750 mPa·s.

Production example 3

To the TOCN dispersion liquid 2 (Na salt form) obtained in Production example 2, a cation exchange resin (AMBERJET1020 manufactured by ORGANO CORPORATION) was added and stirred until the pH reached 2.9. The cation exchange resin was collected by suction filtration, to obtain an H-type oxidized cellulose nanofiber (TOCN) dispersion liquid 3 having the same physical value except for replacement to an acid form.

Example 2

Instead of the powdered cellulose in Example 1, the oxidized cellulose nanofiber dispersion liquid 2 was mixed with NR latex (REGITEX HA-NR LATEX manufactured by REGITEX Co., Ltd., solid concentration: 61.5wt%) so that the solid content ratio became the blending ratio in Table 3, and the mixture was dried. Subsequently, the mixture, S-(3-aminopropyl)thiosulfuric acid (SUMILINK (registered trademark) 100, manufactured by Sumitomo Chemical Co., Ltd.), a CB coupling agent, stearic acid, and zinc oxide were kneaded at 80°C for 5 minutes with a close kneader (Labo Plastomill manufactured by Toyo Seiki Seisaku-sho, Ltd.), and after starting the kneading, the temperature was gradually increased to 130°C, and the mixture was kneaded for 3 minutes. To the mixture, sulfur and a vulcanization accelerator were added and kneaded with a roller mill, and vulcanization molding was performed by the same manner as that of Example 1, to obtain a sheet having a thickness of 2 mm.

Example 3

A sheet having a thickness of 2 mm was obtained by the same manner as that of Example 2 except that (2Z)-4-[(4-aminophenyl)amino]-4-oxo-2-butenoic acid (Sumilink (registered trademark) 200, manufactured by Sumitomo Chemical Co., Ltd.) was used instead of S-(3-aminopropyl)thiosulfuric acid.

Example 4

A sheet having a thickness of 2 mm was obtained by the same manner as that of Example 2 except that the oxidized cellulose nanofiber dispersion liquid 3 was used instead of the oxidized cellulose nanofiber dispersion liquid 2 of Example 2.

Comparative example 3

The same procedures were performed except that S-(3-aminopropyl)thiosulfuric acid in Example 3 was not used.

Comparative example 4

The same procedures were performed except that the oxidized cellulose nanofiber dispersion 2 and S-(3-aminopropyl)thiosulfuric acid in Example 2 were not used.

Blending ratios of respective raw materials in Examples 2 to 4 and Comparative examples 3 to 4 are shown in Table 3.

Evaluation results of respective examples are shown in Table 4.

<Table 3>

| Table 3 Table of blending (unit: part) | | | | | |
|---|---|---|---|---|---|
| | Example 2 | Example 3 | Example 4 | Comparative example 3 | Comparative example.4 |
| NR Latex | 100 | 100 | 100 | 100 | 100 |
| TOCN | 5 | 5 | 0 | 5 | 0 |
| H type TOCN | 0 | 0 | 5 | 0 | 0 |
| SUMILINK (registered trademark) 100 | 1 | 0 | 1 | 0 | 0 |
| SUMILINK (registered trademark) 200 | 0 | 1 | 0 | 0 | 0 |
| Stearic acid | 0.5 | 0.5 | 0.5 | 0.5 | 0.5 |

(continued)

| Table 3 Table of blending (unit: part) | | | | | |
|---|---|---|---|---|---|
| | Example 2 | Example 3 | Example 4 | Comparative example 3 | Comparative example.4 |
| Zinc oxide | 6 | 6 | 6 | 6 | 6 |
| Sulfur | 3.5 | 3.5 | 3.5 | 3.5 | 3.5 |
| Vulcanization accelerator | 0.7 | 0.7 | 0.7 | 0.7 | 0.7 |

<Table 4>

| Table 4 Results of physical properties test (indicated as an index when the result in Comparative example 4 is defined as 100) | | | | | | |
|---|---|---|---|---|---|---|
| | Unit | Example 2 | Example 3 | Example. 4 | Compara tive example 3 | Compara tive example 4 |
| tc(90) | min | 105 | 108 | 104 | 112 | 100 |
| Hardness | - | 125 | 123 | 130 | 118 | 100 |
| M50 | MPa | 185 | 164 | 202 | 158 | 100 |
| Strength at break | MPa | 115 | 111 | 109 | 107 | 100 |
| Elongation at break | % | 90 | 90 | 90 | 89 | 100 |
| Modulus of elasticity | MPa | 191 | 185 | 199 | 168 | 100 |
| tanδ | - | 93 | 115 | 88 | 118 | 100 |
| Dynamic-to-static modulus ratio | - | 98 | 101 | 95 | 103 | 100 |

In Comparative example 3 (only TOCN), the strength at break was lower than that in Comparative Example 4, and tanδ was higher than that in Comparative Example 4, whereas in Example 2 (TOCN and S-(3-aminopropyl)thiosulfuric acid), Example 3 (TOCN and (2Z)-4-[(4-aminophenyl)amino]-4-oxo-2-butenoic acid), and Example 4 (acid-type TOCN and S-(3-aminopropyl)thiosulfuric acid), the strength at break was higher than that in Comparative example 3, and tanδ was lower than that in Comparative example 3. This is considered to be because TOCN is aggregated in rubber, and large interfacial peeling occurs.

The hardness, M50, and modulus of elasticity in Examples 2 to 4 were higher than those in Comparative examples 3 and 4, and especially those in Examples 2 and 4 were largely higher. Furthermore, there was little difference in tc(90) between Comparative example 4 and Examples 2 and 3. This shows that the addition of a cellulose-based filler and a cross-linkable compound hardly affects vulcanization properties. The dynamic-to-static modulus ratio in Examples 2 to 4 were lower than that in Comparative Example 3 in which the cellulose-based filler and the cross-linkable compound were not blended. Therefore, it is obvious that a combination of the cellulose-based filler and the cross-linkable compound can enhance the strength while an increase in dynamic-to-static modulus ratio is suppressed.

In comparison between Examples 2 and 3, all the values in Example 2 were higher than those in Example 3. This shows that the use of SUMILINK (registered trademark) 100 (S-(3-aminopropyl)thiosulfuric acid) can further enhance the strength of the rubber composition as compared with the use of SUMILINK (registered trademark) 200 ((2Z)-4-[(4-aminophenyl)amino]-4-oxo-2-butenoic acid).

Production example 4

5.00 g (absolute dry weight) of bleached and unbeated kraft pulp (NBKP manufactured by Nippon Paper Industries Co., Ltd., whiteness degree: 85%) derived from softwood was added to 500 ml of an aqueous solution obtained by dissolving 39 mg (0.05 mmol relative to 1 g of cellulose in an absolute dry state) of TEMPO (manufactured by Sigma Aldrich) and 514 mg (1.0 mmol relative to 1 g of cellulose in an absolute dry state) of sodium bromide, and the mixture was stirred until the pulp was uniformly dispersed. To the reaction system, an aqueous sodium hypochlorite solution was added so that the concentration of sodium hypochlorite became 5.5 mmol/g, and an oxidation reaction was initiated at room temperature. During the reaction, the pH in the system decreased, and therefore a 3M aqueous sodium hydroxide solution

was sequentially added to adjust the pH to 10. At a time point when sodium hypochlorite was consumed and the pH in the system did not change, the reaction was terminated. To the mixture after the reaction, hydrochloric acid was added to adjust the pH to 2, the mixture was filtered through a glass filter to separate the pulp, and the separated pulp was sufficiently washed with water, to obtain TEMPO oxidized pulp (oxidized pulp 4/TOP). The pulp yield at that time was 90%, the time required for the oxidation reaction was 90 minutes, the amount of carboxy group was 1.37 mmol/g, and the pH was 4.5.

Production example 5

An aqueous dispersion having a solid concentration of 2.0% by mass of the oxidized pulp 4 obtained in Production example 4 was prepared. To the aqueous dispersion, a 5% NaOH aqueous solution and sodium bicarbonate were added to adjust the pH to 8.0, and the mixture was treated with Top Finer (manufactured by AIKAWA Iron Works Co., Ltd.) for 10 minutes, to prepare oxidized cellulose microfibrils (oxidized microfibrils 5/T-MFC). The resultant oxidized cellulose microfibrils had a carboxy group amount of 1.37 mmol/g, a crystallization degree of type I cellulose of 80.4%, an average fiber width of 17.8 μm, an average fiber length of 0.37 mm, an aspect ratio of 21, a specific surface area of 182 $mm^2/g$, a B-type viscosity (25°C / 60 rpm / 1wt%) of 1,710 mPa·s, a water-holding capacity of 101 g/g, a degree of anionization of 0.78 meq/g, an electrical conductivity of 26 mS/m, and a fibrillation ratio of 10.9%.

Example 5

The same procedures were performed except that the oxidized pulp 4 was used instead of the powdered cellulose 1 in Example 1.

Comparative example 5

The same procedures were performed except that S-(3-aminopropyl)thiosulfuric acid in Example 5 was not used.

Example 6

The same procedures were performed except that the oxidized microfibrils 5 were used instead of the powdered cellulose 1 in Example 1.

Comparative example 6

The same procedures were performed except that S-(3-aminopropyl)thiosulfuric acid was not used in Example 5.

Comparative example 7

The same procedures were performed except that the oxidized microfibrils 5 and S-(3-aminopropyl)thiosulfuric acid were not used in Example 6.

] Blending ratios of respective raw materials in Examples 5 to 6 and Comparative examples 5 to 7 are shown in Table 5.

Evaluation results of respective examples are shown in Table 6.

<Table 5>

| Table 5 Table of blending (unit: part) | | | | | |
|---|---|---|---|---|---|
| | Example 5 | Compara tive example 5 | Example 6 | Comparat ive example. 6 | Comparat ive example 7 |
| NR Latex | 100 | 100 | 100 | 100 | 100 |
| TOP | 5 | 5 | 0 | 0 | 0 |
| T-MFC | 0 | 0 | 5 | 5 | 0 |
| SUMILINK (registered trademark) 100 | 1 | 0 | 1 | 0 | 0 |
| Stearic acid | 0.5 | 0.5 | 0.5 | 0.5 | 0.5 |
| Zinc oxide | 6 | 6 | 6 | 6 | 6 |

(continued)

| Table 5 Table of blending (unit: part) | | | | | |
|---|---|---|---|---|---|
| | Example 5 | Compara tive example 5 | Example 6 | Comparat ive example. 6 | Comparat ive example 7 |
| Sulfur | 3.5 | 3.5 | 3.5 | 3.5 | 3.5 |
| Vulcanization accelerator | 0.7 | 0.7 | 0.7 | 0.7 | 0.7 |

<Table 6>

Table 6 Results of physical properties test (indicated as an index when the result in Comparative example 7 is defined as 100)

| | | Example 5 | Comparative example 5 | Example 6 | Comparative example 6 | Comparative example 7 |
|---|---|---|---|---|---|---|
| | | TOP | | T-MFC | | Only NR |
| | | SUMILINK (registered trademark) 100 | No SUMILINK (registered trademark) 100 | SUMILINK (registered trademark) 100 | No SUMILINK (registered trademark) 100 | |
| tc(90) | min | 126 | 130 | 94 | 107 | 100 |
| Hardness | - | 113 | 105 | 123 | 115 | 100 |
| M50 | MPa | 130 | 117 | 173 | 147 | 100 |
| Strength at break | MPa | 110 | 91 | 112 | 103 | 100 |
| Elongation at break | % | 100 | 103 | 90 | 92 | 100 |
| Modulus of elasticity | MPa | 119 | 105 | 152 | 137 | 100 |
| tanδ | - | 101 | 131 | 102 | 118 | 100 |
| Dynamic-to-static modulus ratio | - | 96 | 100 | 96 | 102 | 100 |

In Comparative example 5 (only TOP) and Comparative example 6 (only T-MFC), the strength at break was lower than that in Comparative example 7, and tanδ was higher than that in Comparative example 7, whereas in Example 5 (TOP and S-(3-aminopropyl)thiosulfuric acid), and Example 3 (T-MFC and S-(3-aminopropyl)thiosulfuric acid), the strength at break was higher than that in Comparative example 7, and tanδ was lower than that in Comparative example 7.

The hardness, M50, and modulus of elasticity in Examples 5 and 6 were higher than those in Comparative examples 5 and 6. Furthermore, there was a small different in tc(90) between Comparative example 7 and Examples 5 and 6. This shows that the addition of a cellulose-based filler and a cross-linkable compound hardly affects vulcanization properties. The dynamic-to-static modulus ratio in Examples 5 and 6 in which S-(3-aminopropyl)thiosulfuric acid was blended was lower than those in Comparative examples 5 and 6 in which S-(3-aminopropyl)thiosulfuric acid was not blended. Therefore, it is obvious that a combination of the cellulose-based filler and the cross-linkable compound can enhance the strength while an increase in dynamic-to-static modulus ratio is suppressed.

The results of the above-mentioned examples show that the present invention provides a rubber composition that exhibits good strength and contains a rubber component and cellulose fibers, and a production method of the same.

## Claims

**1.** A rubber composition comprising:

a component A: a rubber component;
a component B: a cellulose-based filler; and
a component C: a cross-linkable compound that has a thiosulfuric acid group or an α,β-unsaturated carbonyl group, and an amino group.

2. The rubber composition according to claim 1, wherein the component B includes at least one selected from the group consisting of pulp fibers, a powdered cellulose, and fine cellulose fibers.

3. The rubber composition according to claim 1 or 2, wherein the amino group is an $-NH_2$ group.

4. The rubber composition according to any one of claims 1 to 3, wherein the component C includes at least

a compound in which the thiosulfuric acid group and the amino group are linked by an alkyl group, or
a compound in which the α,β-unsaturated carbonyl group and the amino group are linked by a divalent group including an aromatic ring and an amide bond.

5. The rubber composition according to claim 4, wherein the alkyl group is an alkyl group of 1 to 6 carbon atoms.

6. The rubber composition according to any one of claims 1 to 5, wherein the component C includes at least S-(3-aminopropyl)thiosulfuric acid.

7. A production method of the rubber composition according to any one of claims 1 to 6, comprising a step of kneading the component A: the rubber component, the component B: the cellulose-based filler, and the component C: the cross-linkable compound that has the thiosulfuric acid group or the α,β-unsaturated carbonyl group, and the amino group.

8. The production method according to claim 7, further comprising a step of vulcanizing a mixture after kneaded.

## INTERNATIONAL SEARCH REPORT

International application No.
**PCT/JP2022/048102**

**A. CLASSIFICATION OF SUBJECT MATTER**

***C08L 21/00***(2006.01)i; ***C08K 5/17***(2006.01)i; ***C08K 5/41***(2006.01)i; ***C08L 1/00***(2006.01)i
FI: C08L21/00; C08K5/17; C08K5/41; C08L1/00

According to International Patent Classification (IPC) or to both national classification and IPC

**B. FIELDS SEARCHED**

Minimum documentation searched (classification system followed by classification symbols)

C08K3/00 - 13/08, C08L1/00 - 101/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2021-095473 A (THE YOKOHAMA RUBBER CO., LTD.) 24 June 2021 (2021-06-24) claims, paragraphs [0015], [0022], [0025], [0032], examples | 1-8 |
| A | JP 2008-274064 A (MITSUBOSHI BELTING LTD.) 13 November 2008 (2008-11-13) entire text | 1-8 |
| A | JP 2021-050355 A (SUMITOMO CHEMICAL CO., LTD.) 01 April 2021 (2021-04-01) entire text | 1-8 |
| A | JP 2018-123272 A (THE YOKOHAMA RUBBER CO., LTD.) 09 August 2018 (2018-08-09) entire text | 1-8 |
| A | WO 2018/147342 A1 (NIPPON PAPER INDUSTRIES CO., LTD.) 16 August 2018 (2018-08-16) entire text | 1-8 |
| A | JP 2021-017586 A (MITSUBOSHI BELTING LTD.) 15 February 2021 (2021-02-15) entire text | 1-8 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 March 2023** | **28 March 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2022/048102**

**C. DOCUMENTS CONSIDERED TO BE RELEVANT**

| Category* | Citation of document, with indication, where appropriate, of the relevant passages | Relevant to claim No. |
|---|---|---|
| A | WO 2018/211932 A1 (BRIDGESTONE CORP.) 22 November 2018 (2018-11-22) entire text | 1-8 |
| A | JP 2014-141637 A (MITSUBISHI CHEMICAL CORP.) 07 August 2014 (2014-08-07) entire text | 1-8 |
| A | CN 105968597 A (SUZHOU BEILITE LOGISTICS EQUIPMENT CO., LTD.) 28 September 2016 (2016-09-28) entire document | 1-8 |
| A | CN 110922658 A (ZHEJIANG HUANKE WANSHUN MATERIAL CO., LTD.) 27 March 2020 (2020-03-27) entire document | 1-8 |

Form PCT/ISA/210 (second sheet) (January 2015)

**INTERNATIONAL SEARCH REPORT**
**Information on patent family members**

International application No.
**PCT/JP2022/048102**

| Patent document cited in search report | Publication date (day/month/year) | Patent family member(s) | Publication date (day/month/year) |
|---|---|---|---|
| JP 2021-095473 A | 24 June 2021 | (Family: none) | |
| JP 2008-274064 A | 13 November 2008 | (Family: none) | |
| JP 2021-050355 A | 01 April 2021 | (Family: none) | |
| JP 2018-123272 A | 09 August 2018 | (Family: none) | |
| WO 2018/147342 A1 | 16 August 2018 | US 2020/0362146 A1<br>entire document<br>EP 3581618 A1<br>entire document | |
| JP 2021-017586 A | 15 February 2021 | (Family: none) | |
| WO 2018/211932 A1 | 22 November 2018 | US 2020/0079933 A1<br>entire document<br>EP 3626773 A1<br>entire document | |
| JP 2014-141637 A | 07 August 2014 | (Family: none) | |
| CN 105968597 A | 28 September 2016 | (Family: none) | |
| CN 110922658 A | 27 March 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 6878787 B